# EUROPEAN PATENT APPLICATION

(11) **EP 4 597 216 A1**
(43) Date of publication of application: **06.08.2025**
(21) Application number: 23872708.5
(22) Date of filing: 26.06.2023
(51) Int. Cl.: G03B 5/04, G03B 3/10, G03B 13/36, G03B 17/12, G03B 30/00, G02B 7/09

(54) **LENS DRIVING DEVICE, CAMERA DEVICE, AND OPTICAL DEVICE**

(30) Priority: 28.09.2022 KR 20220123826
(71) Applicant: LG INNOTEK CO. LTD, Gangseo-gu Seoul 07796 (KR)
(72) Inventor: NOH, Yun Ho, Seoul 07796 (KR); LEE, Sung Guk, Seoul 07796 (KR)
(74) Representative: DREISS Patentanwälte PartG mbB
(86) International application number: PCT/KR2023/008874
(87) International publication number: WO 2024/071581

(57) **Abstract**

The present embodiment relates to a lens driving device comprising: a fixed part; a first moving part disposed on the fixed part; a second moving part disposed within the first moving part; a third moving part disposed within the second moving part; a first driving part that moves the first moving part in a first direction perpendicular to an optical axis direction; a second driving part that moves the second moving part in a second direction perpendicular to the optical axis direction and the first direction; and a third driving part that moves the third moving part in the optical axis direction, wherein the first driving part includes: a first magnet disposed on the fixed part; and a first coil disposed on the first moving part, and the second driving part includes: a second magnet disposed on the second moving part; and a second coil disposed on the first moving part.

## Description

### [Technical Field]

The present embodiment relates to a lens driving device, a camera device, and an optical device.

### [Background Art]

A camera device is a device that photographs a picture or video of a subject, and is installed in optical instruments such as smartphones, drones, and vehicles.

An auto-focus function that automatically adjusts the focus according to the distance of the subject is applied to the camera device. In addition, a shake correction function is applied to prevent a phenomenon in which the focus is shaking by the user's shaking hands.

Autofocus and shaking hand correction functions can be performed through the electromagnetic interaction between the magnet and the coil.

However, in conventional lens driving devices, in the arrangement of magnets and coils for performing the image stabilization function, magnets that do not require electrical connection are disposed in the moving part, and the coils are disposed in the fixed part. In this case, there is a problem that the magnets, which are heavier than the coils, are disposed in the moving part, which increases the current consumption for performing the shaking hand correction function.

In particular, recently, as image sensors become highly pixelated, the lens diameter has increased, and the weight of the lens has also increased, which has exacerbated the problem.

In addition, in order to dispose the magnets and coils, and the like for performing the auto focus function and shaking hand correction function, a size larger than the thickness of the smartphone in an optical axis direction is required, which causes the camera device mounted on the smartphone to be protruded more than other portions of the smartphone.
(Patent Literature 1) KR 10-2015-0118005 A

### [Detailed Description of the Invention]

### [Technical Subject]

In a structure for performing a shaking hand correction function, the present embodiment is intended to provide a lens driving device in which power consumption for performing an autofocus function is reduced by arranging a coil that is lightweight compared to a magnet in a moving part.

In addition, the present embodiment is intended to provide a camera device having an autofocus function and a shaking hand correction function, but with a minimized size in an optical axis direction.

### [Technical Solution]

A lens driving device according to the present embodiment comprises: a fixed part; a first moving part being disposed on the fixed part; a second moving part being disposed within the first moving part; a third moving part being disposed within the second moving part; a first driving part moving the first moving part in a first direction perpendicular to an optical axis direction; a second driving part moving the second moving part in a second direction perpendicular to the optical axis direction and the first direction; and a third driving part moving the third moving part in the optical axis direction, wherein the first driving part may comprise a first magnet being disposed in the fixed part and a first coil being disposed in the first moving part, and wherein the second driving part may comprise a second magnet being disposed in the second moving part and a second coil being disposed in the first moving part.

The third driving part may comprise a third magnet being disposed on the third moving part and a third coil being disposed in the second moving part.

The lens driving device may comprise a first ball being disposed between the fixed part and the first moving part in the second direction.

The lens driving device may comprise a second ball being disposed between the first moving part and the second moving part in the first direction.

The lens driving device may comprise a third ball being disposed between the second moving part and the third moving part in the second direction.

The fixed part comprises a lower plate and a protruding portion being protruded from the lower plate, the protruding portion of the fixed part is disposed within the first moving part, and the first ball may be disposed in the protruding portion of the fixed part.

The lens driving device comprises a first substrate comprising an outer portion being disposed in the fixed part, an inner portion being disposed in the first moving part, and a connecting portion connecting the outer portion and the inner portion, and at least a portion of the connecting portion of the first substrate can be movably formed in the first direction.

The lens driving device comprises a second substrate comprising an outer portion being disposed on the fixed part, an inner portion being disposed on the second moving part, and a connecting portion connecting the outer portion and the inner portion, wherein at least a portion of the connecting portion of the second substrate can be movably formed in the first direction and the second direction.

The lens driving device may comprise a first yoke being disposed in the first moving part and having an attractive force with the first magnet.

The above lens driving device may comprise a second yoke being disposed in the first moving part and having an attractive force with the second magnet.

The lens driving device may comprise a third yoke being disposed in the second moving part and having an attractive force with the third magnet.

The fixed part comprises a base and a cover being disposed in the base, wherein the cover comprises a first side plate and a second side plate being disposed opposite to each other, and a third side plate and a fourth side plate disposed on opposite sides, and wherein an outer surface of the third magnet can be disposed parallel to the second side plate.

The fixed part comprises a base and a cover being disposed in the base, wherein the cover comprises a first side plate and a second side plate being disposed opposite to each other, and a third side plate and a fourth side plate disposed on opposite sides, and wherein when viewed from above, an outer surface of the third magnet can be inclinedly disposed between the second side plate and the fourth side plate.

A lens driving device according to the present embodiment comprises: a fixed part; a first moving part being disposed in the fixed part; a second moving part being disposed within the first moving part; a third moving part being disposed within the second moving part; a first driving part that moves the first moving part in a first direction perpendicular to an optical axis direction; a second driving part that moves the second moving part in a second direction perpendicular to the optical axis direction and the first direction; and a third driving part that moves the third moving part in the optical axis direction, wherein the first moving part comprises a first portion being disposed outside the fixed part, and wherein a ball may be disposed between the first portion of the first moving part and the fixed part.

A camera device according to the present embodiment may comprise a printed circuit board; an image sensor being disposed in the printed circuit board; the lens driving device being disposed on the printed circuit board; and a lens being coupled to the lens driving device.

An optical device according to the present embodiment may comprise a main body; a camera device being disposed in the main body; and a display being disposed in the main body and outputting at least any one or more of an image and a video photographed by the camera device.

### [Advantageous Effects]

Through the present embodiment, as the coil having a lighter weight than the magnet is disposed in the moving part, current consumption for performing the autofocus function may be reduced.

In addition, it is possible to perform an auto-focus function and a shaking hand correction function in a camera device of a size being minimized in an optical axis direction.

That is, according to the present embodiment, even though it is a camera device not being protruded from a smartphone, both an auto-focus function and a shaking hand correction function can be performed.

### [Brief Description of Drawings]

FIG. 1 is a conceptual diagram of a lens driving device according to the present embodiment.
FIG. 2 is a perspective view of a lens driving device according to the present embodiment.
FIG. 3 is a cross-sectional view taken along line A-A of FIG. 2.
FIG. 4 is a cross-sectional view taken along line B-B of FIG. 2.
FIG. 5 is a cross-sectional view taken along line C-C of FIG. 2.
FIG. 6 is a cross-sectional view taken along line D-D of FIG. 2.
FIG. 7 is a cross-sectional view taken along line E-E of FIG. 2.
FIG. 8 is an exploded perspective view of a lens driving device according to the present embodiment.
FIG. 9 is an exploded perspective view of a lens driving device according to the present embodiment viewed from a different direction than FIG. 8.
FIG. 10 is a cross-sectional view of a lens driving device according to the present embodiment cut in a direction perpendicular to an optical axis and viewed from above.
FIG. 11 is a cross-sectional view of a lens driving device according to the present embodiment cut at a plane more above than FIG. 10 in a direction perpendicular to an optical axis and from above.
FIG. 12 is a perspective view of a lens driving device according to the present embodiment with a cover omitted.
FIG. 13 is an exploded perspective view viewed from a different direction than FIG. 7.
FIG. 14 is a perspective view illustrating a fixed part and related configuration of a lens driving device according to the present embodiment.
FIG. 15 is a perspective view illustrating a moving part and related configuration of a lens driving device viewed from a different direction from FIG. 11.
FIG. 16 is a perspective view illustrating an OIS-x moving part and related configuration of a lens driving device according to the present embodiment.
FIG. 17 is a perspective view illustrating an OIS-x carrier and related coil of a lens driving device according to the present embodiment.
FIG. 18 is a perspective view illustrating an outer substrate and related coil of a lens driving device according to the present embodiment.
FIG. 19 is a perspective view illustrating an OIS-y moving part and related configuration of a lens driving device according to the present embodiment.
FIG. 20 is a perspective view illustrating an outer substrate and related coil of a lens driving device according to the present embodiment.
FIG. 21 is a perspective view illustrating an AF moving part and related configuration of a lens driving device according to the present embodiment.
FIG. 22 is an exploded perspective view of an OIS-x carrier of a lens driving device according to the present embodiment.
FIG. 23 is a bottom exploded perspective view of an OIS-y carrier of a lens driving device according to the present embodiment. FIG. 24 is a cross-sectional perspective view showing the OIS-x driving part and related configuration of the lens driving device according to the present embodiment.
FIG. 25 is a cross-sectional perspective view showing the OIS-y driving part and related configuration of the lens driving device according to the present embodiment.
FIG. 26 is a perspective view of the lens driving device according to a modified example with the cover omitted.
FIG. 27 is a cross-sectional view of FIG. 26 cut in a direction perpendicular to the optical axis and viewed from above.

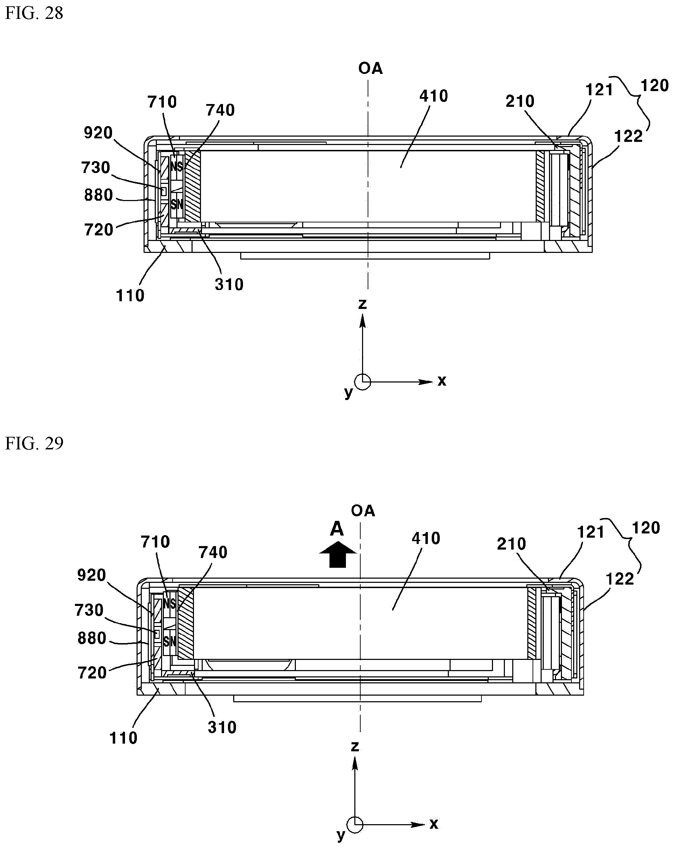

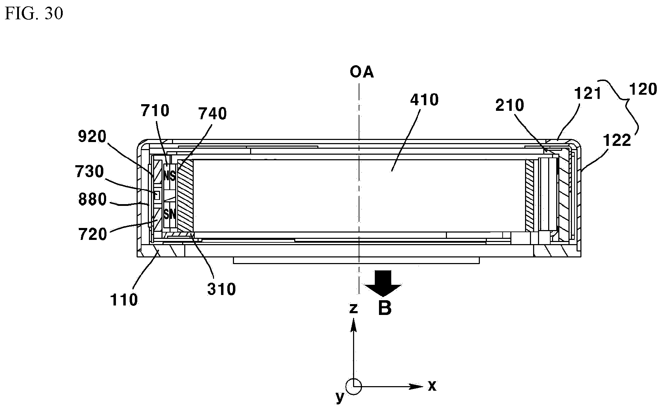

FIGS. 28 to 30 are diagrams for explaining the auto focus driving of a lens driving device according to the present embodiment. FIG. 28 is a cross-sectional view illustrating the appearance of a moving part in an initial state where no current is applied to the AF coil. FIG. 29 is a cross-sectional view illustrating the appearance where a moving part moves upward in an optical axis direction when a forward current is applied to an AF coil. FIG. 30 is a cross-sectional view illustrating the appearance where a moving part moves downward in an optical axis direction when a reverse current is applied to an AF coil.

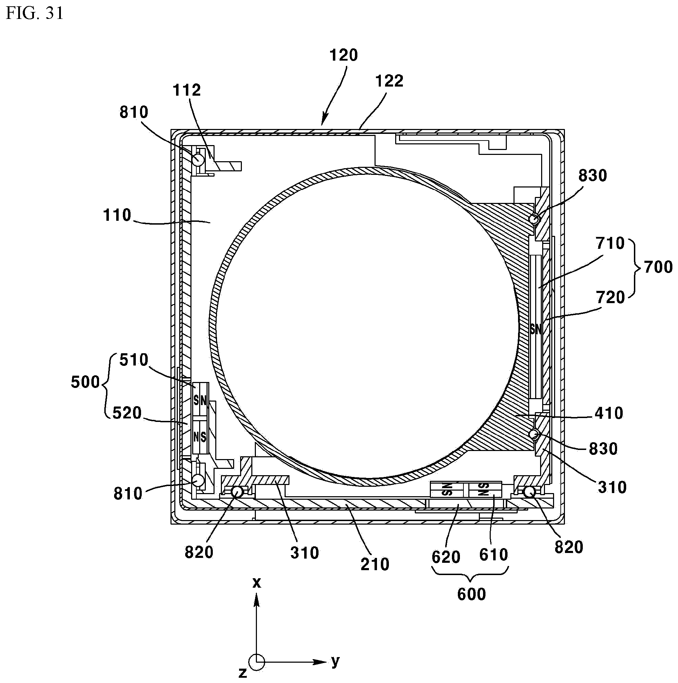

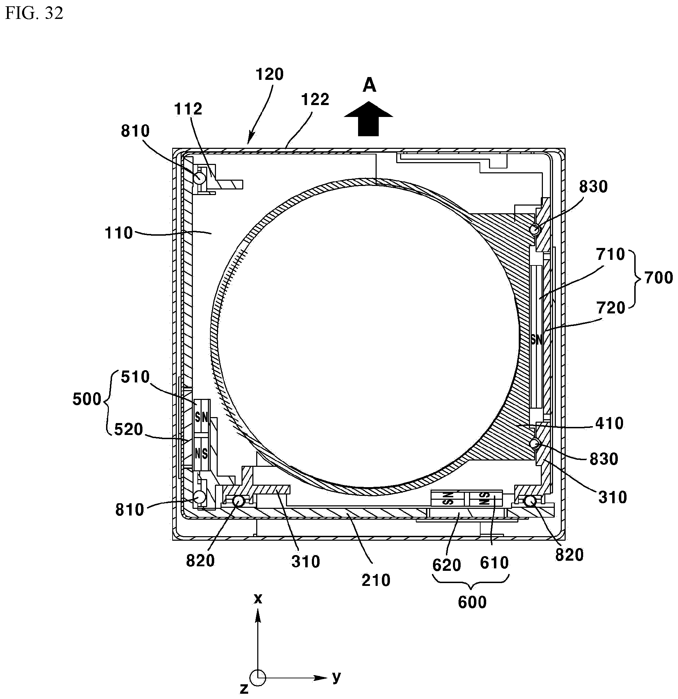

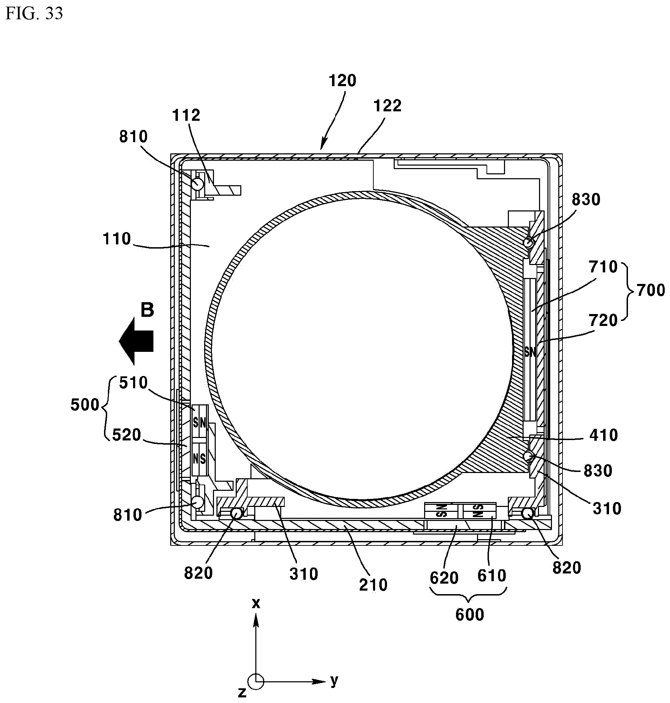

FIGS. 31 to 33 are diagrams for explaining the shaking hand correction driving of a lens driving device according to the present embodiment. FIG. 31 is a cross-sectional view illustrating the appearance of an OIS moving part in an initial state in which no current is applied to an OIS-x coil and an OIS-y coil. FIG. 32 is a cross-sectional view illustrating the appearance in which an OIS moving part moves in an x-axis direction perpendicular to the optical axis when current is applied to the OIS-x coil. FIG. 33 is a cross-sectional view illustrating the appearance in which the OIS-y moving part moves in a y-axis direction perpendicular to both the optical axis and the x-axis when current is applied to an OIS-y coil.
FIG. 34 is an exploded perspective view of a camera device according to the present embodiment.
FIG. 35 is a perspective view of an optical device according to the present embodiment.
FIG. 36 is a perspective view of an optical device according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

The 'optical axis (see **OA** of FIG. 28) direction' used hereinafter is defined as an optical axis direction of a lens and/or image sensor being coupled to a lens driving device.

The 'vertical direction' used hereinafter may be a direction parallel to or the same as an optical axis direction. The vertical direction may correspond to a 'z-axis direction'. The 'horizontal direction' used hereinafter may be a direction perpendicular to a vertical direction. That is, a horizontal direction may be a direction perpendicular to the optical axis. Therefore, a horizontal direction may comprise an 'x-axis direction' and a 'y-axis direction'.

The 'auto focus (AF) function' used hereinafter is defined as a function that automatically focuses on a subject by adjusting the distance from an image sensor by moving the lens in an optical axis direction according to the distance of the subject so that a clear image of the subject can be obtained on an image sensor. In addition, 'closed-loop auto focus (CLAF) control' is defined as detecting the distance between an image sensor and a lens and controlling the position of the lens through feedback in real time in order to improve the accuracy of focus adjustment.

The 'optical image stabilization (OIS) function' used hereinafter is defined as a function that moves or tilts a lens in a direction perpendicular to the optical axis to offset shaking hand in order to prevent an image or video from handshaking due to the user's shaking hand. In addition, 'closed-loop auto focus (CLAF) control' is defined as detecting the position of a lens with respect to an image sensor and controlling the feedback of the lens position in real time in order to improve the accuracy of shaking hand correction.

Hereinafter, any one among an "OIS-x moving part **200**", "OIS-y moving part **300**" and "AF moving part **400**" may be referred to as a "first moving part", the other may be referred to as a "second moving part", and yet the other may be referred to as a "third moving part".

Hereinafter, any one among an "OIS-x driving part **500**", "OIS-y driving part **600**" and "AF driving part **700**" may be referred to as a "first driving part", the other may be referred to as a "second driving part", and yet the other may be referred to as a "third driving part".

Hereinafter, any one among an "OIS-x magnet **510**", "OIS-y magnet **610**" and "AF magnet **710**" may be referred to as a "first magnet", the other may be referred to as a "second magnet", and yet the other may be referred to as a "fourth magnet".

Hereinafter, any one among an "OIS-x coil **52**0", "OIS-y coil **620**" and "AF coil **720**" may be referred to as a "first coil", the other may be referred to as a "second coil", and yet the other may be referred to as a "third coil".

Hereinafter, one among an "AF sensor **530**", an "OIS-x sensor **630**", and an "OIS-y sensor **730**" may be referred to as a "first sensor", the other may be referred to as a "second sensor", and yet the other may be referred to as a "third sensor".

Hereinafter, one among an "OIS-x guide ball **810**", an "OIS-y guide ball **820**", and an "AF guide ball **830**" may be referred to as a "first ball", the other may be referred to as a "second ball", and yet the other may be referred to as a "third ball".

Hereinafter, one of an "outer substrate **910**" and an "inner substrate **920**" may be referred to as a "first substrate" and the other may be referred to as a "second substrate"

Hereinafter, any one among an "OIS-x yoke **540**", an "OIS-y yoke **640**", an "AF yoke **740**", a "OIS-x ball pressure yoke **860**", "OIS-y ball pressure yoke **870**" and "AF ball pressure yoke **880**" is referred to as a "first yoke", the other is referred to as a "second yoke", yet the other is referred to as a "third yoke", still the other is referred to as a "fourth yoke", yet still the other is referred to as a "fifth yoke", and still yet the other may be referred to as a "sixth yoke".

Hereinafter, the configuration of a lens driving device according to the present embodiment is described with reference to the drawings.

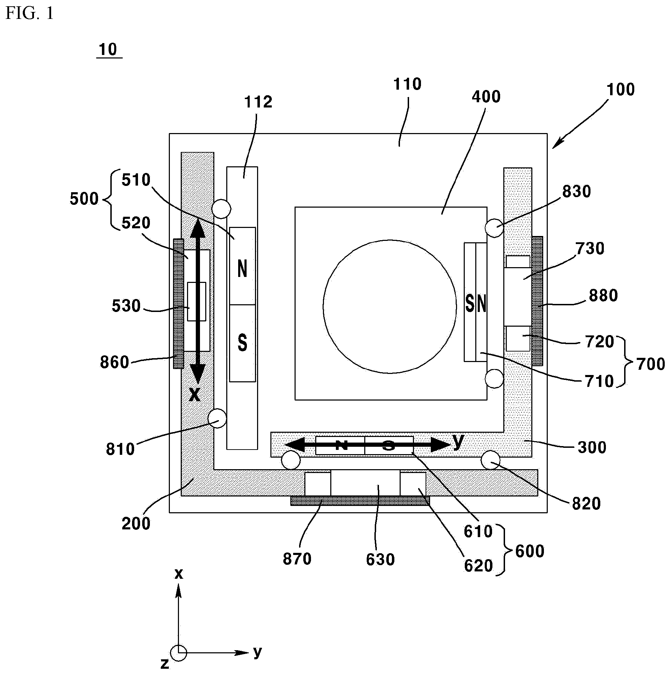

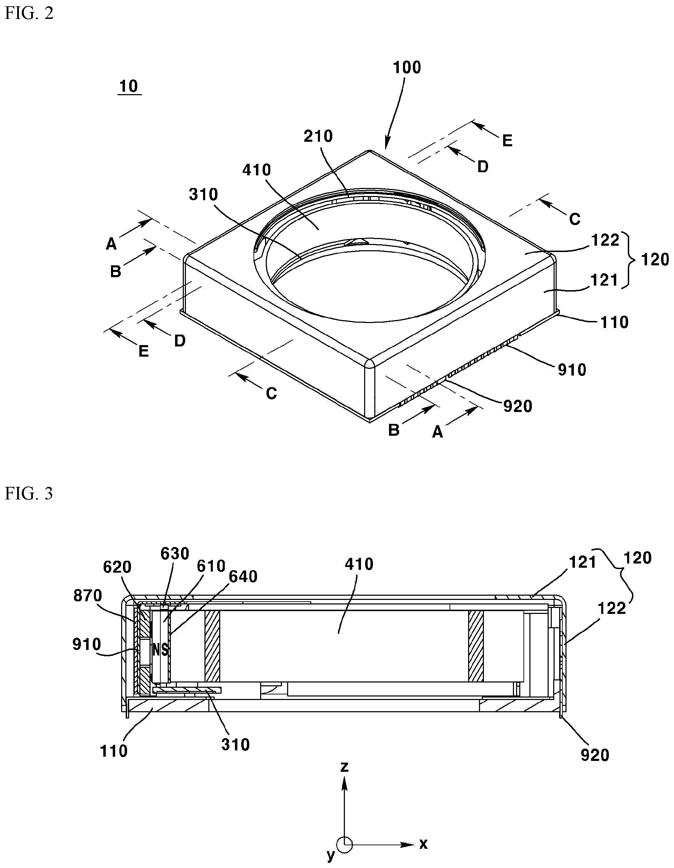

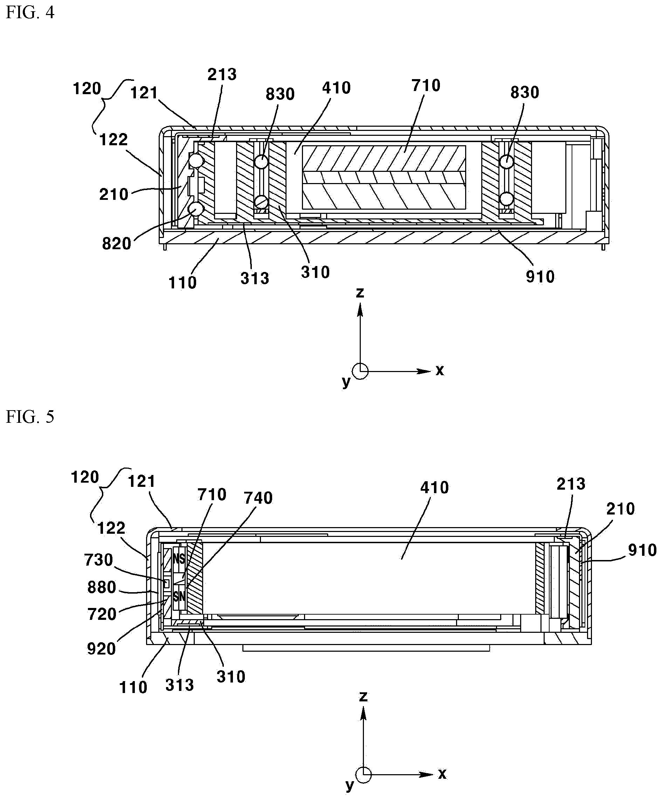

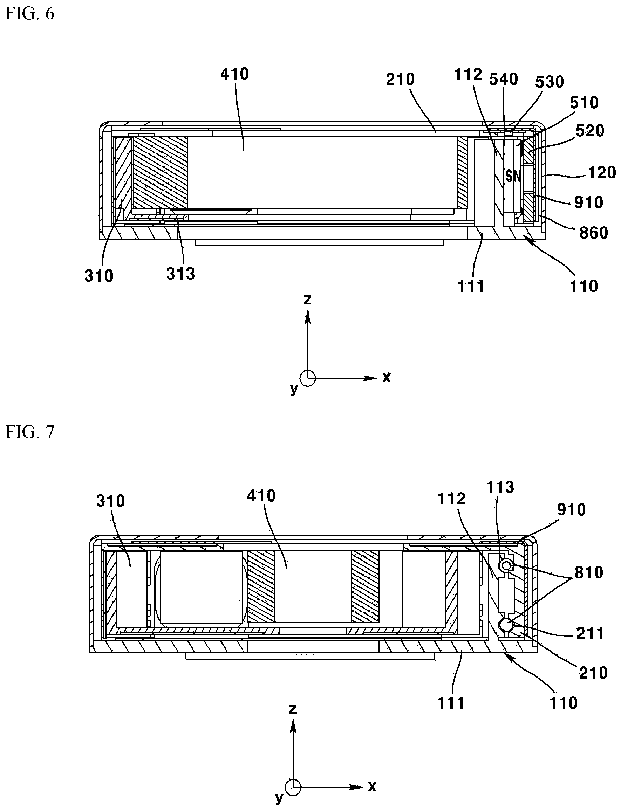

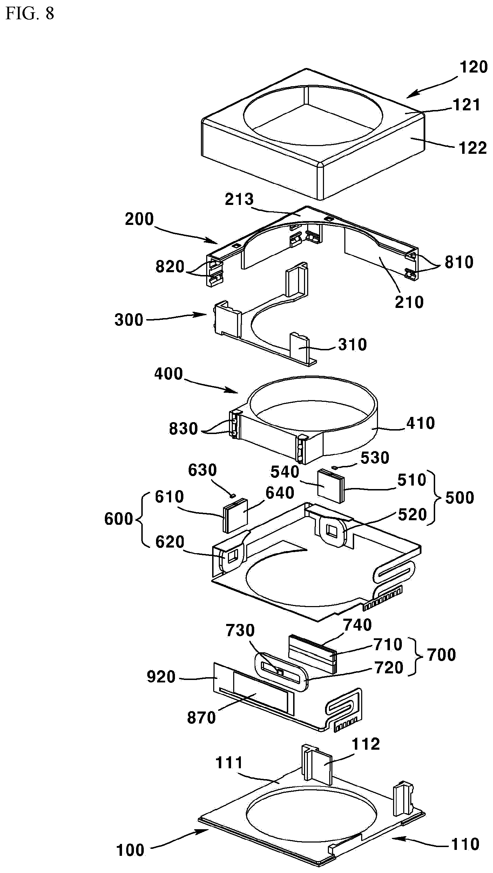

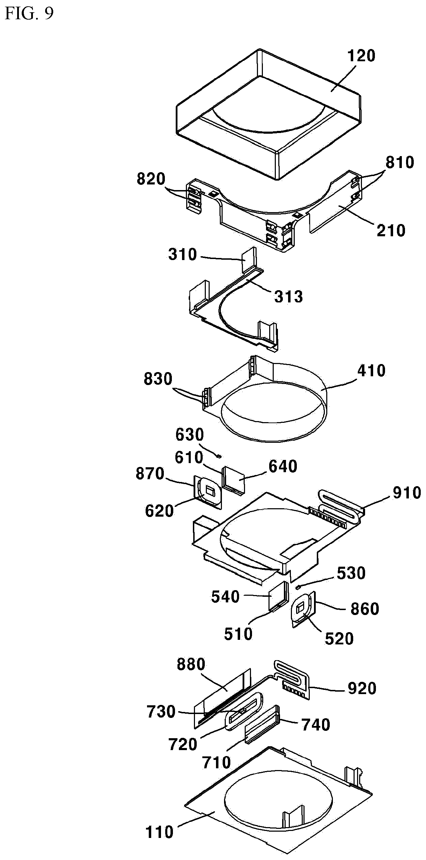

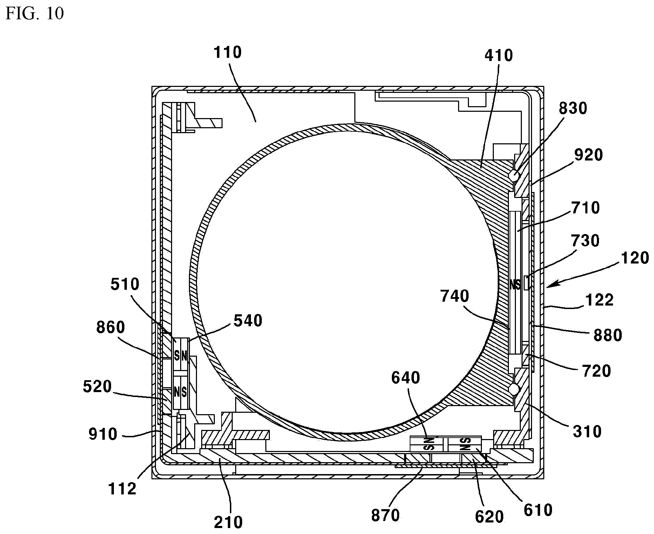

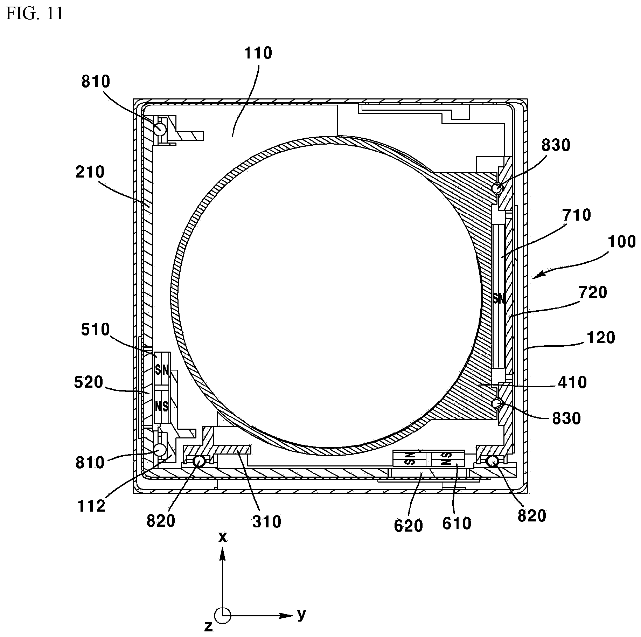

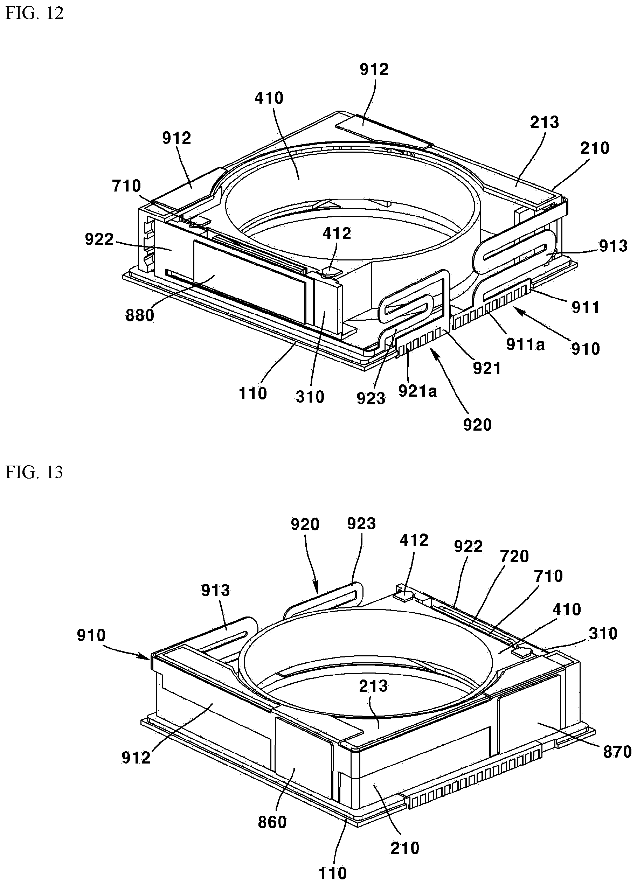

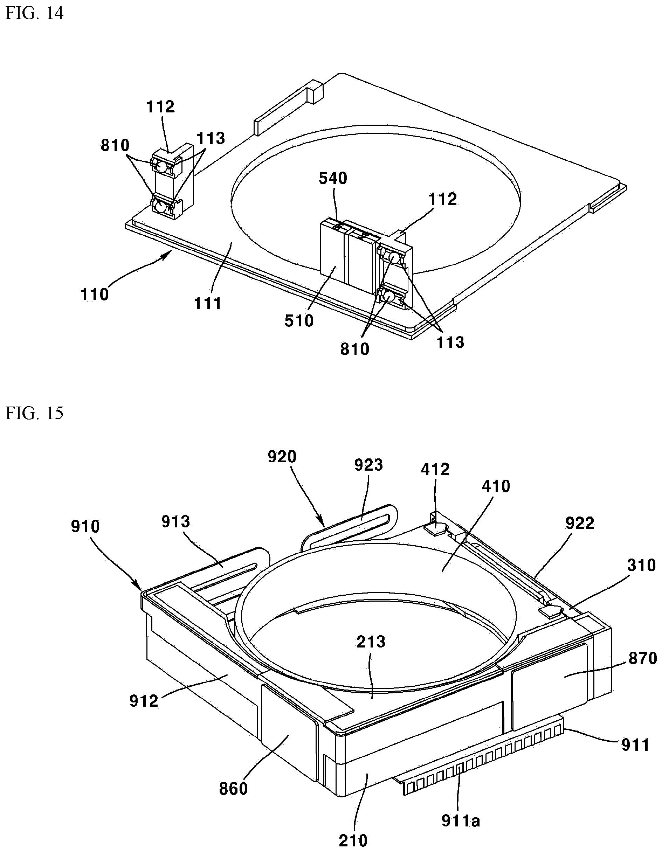

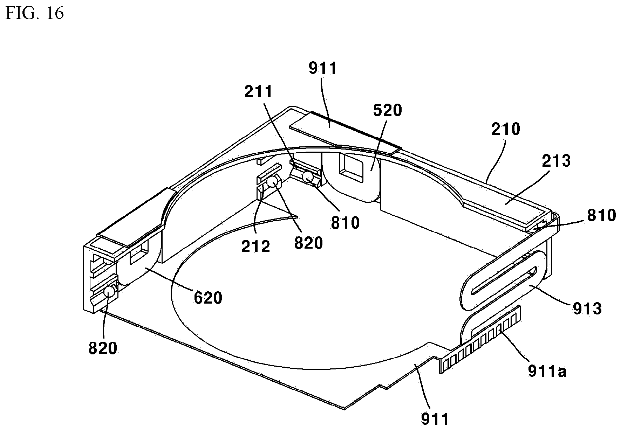

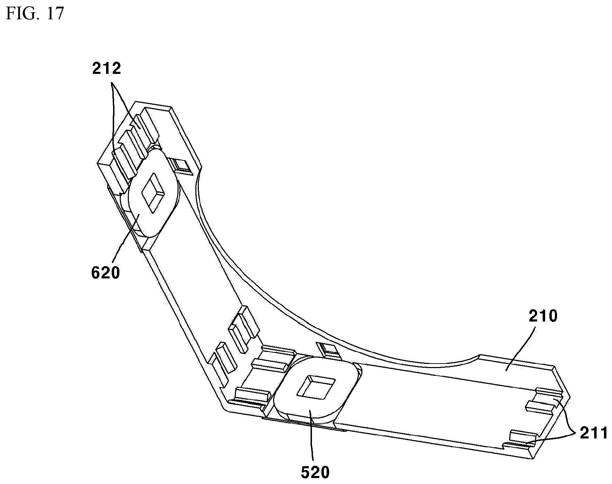

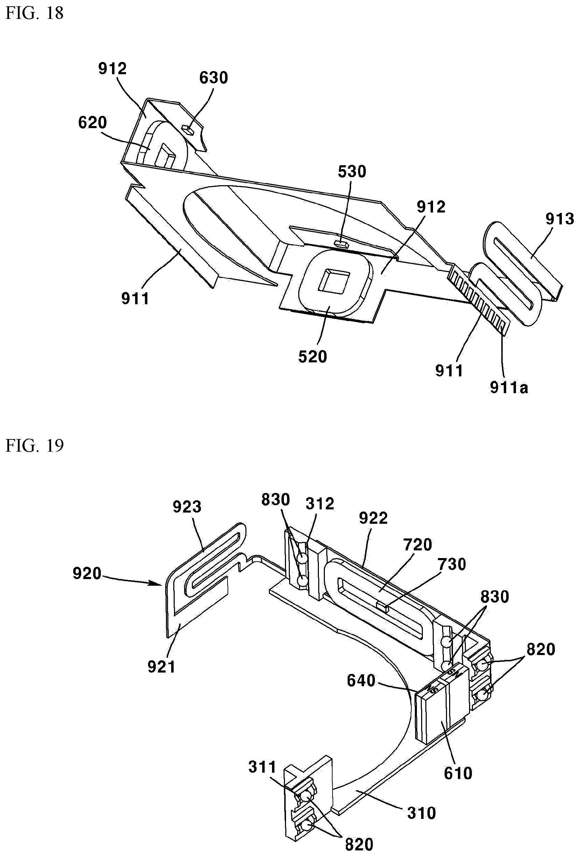

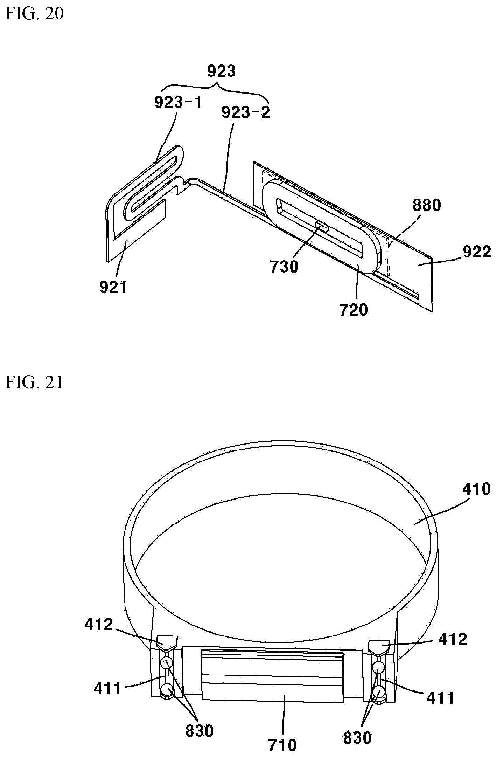

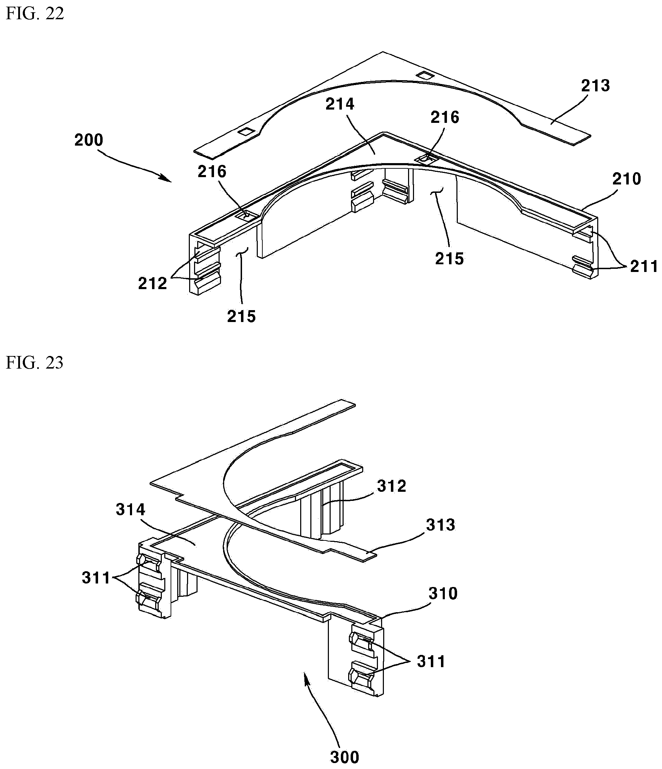

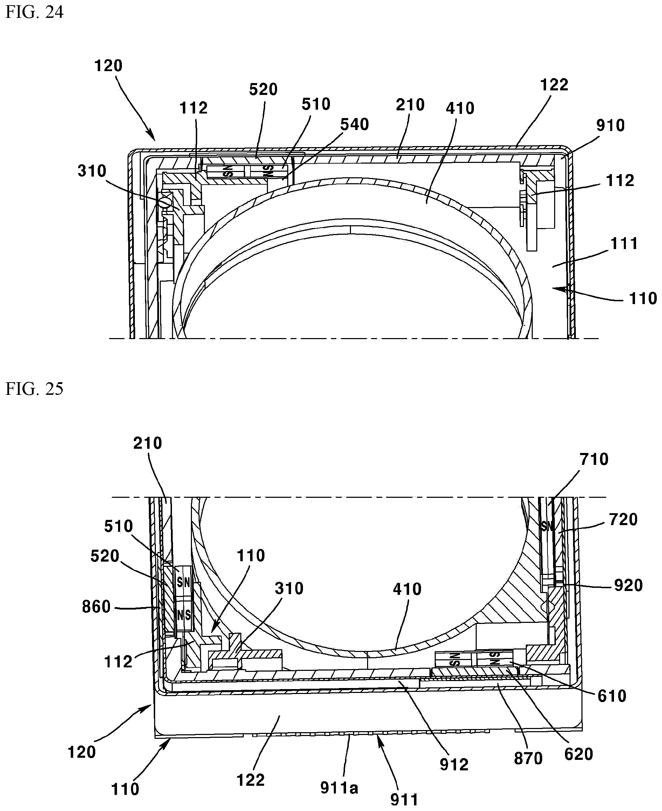

FIG. 1 is a conceptual diagram of a lens driving device according to the present embodiment; FIG. 2 is a perspective view of a lens driving device according to the present embodiment; FIG. 3 is a cross-sectional view taken along line A-A of FIG. 2; FIG. 4 is a cross-sectional view taken along line B-B of FIG. 2; FIG. 5 is a cross-sectional view taken along line C-C of FIG. 2; FIG. 6 is a cross-sectional view taken along line D-D of FIG. 2; FIG. 7 is a cross-sectional view taken along line E-E of FIG. 2; FIG. 8 is an exploded perspective view of a lens driving device according to the present embodiment; FIG. 9 is an exploded perspective view of a lens driving device according to the present embodiment viewed from a different direction than FIG. 8; FIG. 10 is a cross-sectional view of a lens driving device according to the present embodiment cut in a direction perpendicular to an optical axis and viewed from above; FIG. 11 is a cross-sectional view of a lens driving device according to the present embodiment cut at a plane more above than FIG. 10 in a direction perpendicular to an optical axis and from above; FIG. 12 is a perspective view of a lens driving device according to the present embodiment with a cover omitted; FIG. 13 is an exploded perspective view viewed from a different direction than FIG. 7; FIG. 14 is a perspective view illustrating a fixed part and related configuration of a lens driving device according to the present embodiment; FIG. 15 is a perspective view illustrating a moving part and related configuration of a lens driving device viewed from a different direction from FIG. 11; FIG. 16 is a perspective view illustrating an OIS-x moving part and related configuration of a lens driving device according to the present embodiment; FIG. 17 is a perspective view illustrating an OIS-x carrier and related coil of a lens driving device according to the present embodiment; FIG. 18 is a perspective view illustrating an outer substrate and related coil of a lens driving device according to the present embodiment; FIG. 19 is a perspective view illustrating an OIS-y moving part and related configuration of a lens driving device according to the present embodiment; FIG. 20 is a perspective view illustrating an outer substrate and related coil of a lens driving device according to the present embodiment; FIG. 21 is a perspective view illustrating an AF moving part and related configuration of a lens driving device according to the present embodiment; FIG. 22 is an exploded perspective view of an OIS-x carrier of a lens driving device according to the present embodiment; FIG. 23 is a bottom exploded perspective view of an OIS-y carrier of a lens driving device according to the present embodiment; FIG. 24 is a cross-sectional perspective view showing the OIS-x driving part and related configuration of the lens driving device according to the present embodiment; and FIG. 25 is a cross-sectional perspective view showing the OIS-y driving part and related configuration of the lens driving device according to the present embodiment.

The lens driving device 10 may be a voice coil motor (VCM). The lens driving device 10 may be a lens driving motor. The lens driving device 10 may be a lens driving actuator. The lens driving device 10 may comprise an AF module. The lens driving device 10 may comprise an OIS module.

The lens driving device **10** may comprise a fixed part **100.** The fixed part **100** may be a portion that is relatively fixed when the moving part moves. The moving part may move against the fixed part **100.**

The lens driving device **10** may comprise a base **110.** The fixed part **100** may comprise a base **110.** The base **110** may be disposed below the OIS-x carrier **210.** The base **110** may be disposed below the OIS-y carrier **310.** The base **110** may be disposed below the AF carrier **410.** The base **110** may be coupled with the cover **120.** The OIS-x carrier **210,** the OIS-y carrier **310,** and the AF carrier **410** may be disposed on the base **110.** The OIS-x carrier **210,** the OIS-y carrier **310,** and the AF carrier **410** may be disposed on the lower plate portion **111** of the base **110.** The OIS-x carrier **210,** the OIS-y carrier **310,** and the AF carrier **410** may be disposed within the base **110.**

The base **110** may comprise a lower plate **111.** The base **110** may comprise a protruding portion **112.** The protruding portion **112** may be a 'side plate'. The protruding portion **112** may be a 'side plate'. The protruding portion **112** may be a 'side wall'. The protruding portion **112** of the base **110** may be extended from an upper surface of the lower plate **111.** The protruding portion **112** of the base **110** may be protruded from the lower plate **111.** The protruding portion **112** of the base **110** may be protruded upward from an upper surface of the lower plate **111.** The protruding portion **112** of the base **110** may be disposed within the OIS-x moving part **200.** The protruding portion **112** of the base **110** may be disposed within the OIS-x carrier **210.** The protruding portion **112** of the base **110** may be disposed between the OIS-x carrier **210** and the OIS-y carrier **310.** The protruding portion **112** of the base **110** may be disposed between the OIS-x carrier **210** and the AF carrier **410.** The OIS-x guide ball **810** can be disposed on the protruding portion **112** of the fixed part **100.** The OIS-x magnet **510** can be disposed on the protruding portion **112** of the fixed part **100.**

The base **110** may comprise a groove **113.** The groove **113** may be an 'OIS-x guide ball accommodating groove'. An OIS-x guide ball **810** may be disposed in the groove **113.** The groove **113** may be in direct contact with the OIS-x guide ball **810.** The groove **113** may be disposed in a direction perpendicular to the optical axis. The groove **113** may comprise a plurality of grooves. The groove **113** may comprise four grooves. The four grooves may be disposed parallel to each other. The groove **113** may comprise a first groove being in contact with the OIS-x guide ball **810** at two points and a second groove being in contact with the OIS-x guide ball **810** at one point. In a modified embodiment, both the first groove and the second groove may be in contact with the OIS-x guide ball **810** at two points.

The base **110** may comprise a step. The step may be formed at a lower end portion of the outer side surface of the base **110.** The step may be protruded from an outer side surface of the base **110.** A side plate **122** of the cover **120** may be disposed in the step of the base **110.**

The lens driving device **10** may comprise a cover **120.** The fixed part **100** may comprise a cover **120.** The cover **120** may be disposed in the base **110.** The cover **120** may be disposed on the base **110.** The cover **120** may be coupled to the base **110.** The cover **120** may be fixed to the base **110.** The cover **120** may accommodate an OIS-x carrier **210** therein. The cover **120** may accommodate an OIS-y carrier **310** and an AF carrier **410** therein. The cover **120** may be a shield member. The cover **120** may be a shield can.

The cover **120** may comprise an upper plate **121.** The upper plate **121** may be disposed on the moving part. The upward movement of the moving part may be limited by the moving part being in contact with the upper plate **121.** The upper plate **121** may comprise a hole through which light passes.

The cover **120** may comprise a side plate **122.** The side plate **122** may be extended from the upper plate **121.** The side plate **122** may be disposed in the base **110.** The side plate **122** may be disposed on a step portion being protruded from a lower end portion of an outer side surface of the base **110.** The side plate **122** may comprise a plurality of side plates. The side plate **122** may comprise four side plates. The side plate **122** may comprise a first side plate and a second side plate being disposed opposite to each other and a third side plate and a fourth side plate being disposed opposite to each other.

The lens driving device **10** may comprise a moving part. The moving part may be disposed in the fixed part **100.** The moving part may be disposed in the fixed part **100.** The moving part may be disposed within the fixed part **100.** The moving part may be movably disposed on the fixed part **100.** The moving part may be moved with respect to the fixed part **100** by the driving part. The moving part may be moved during AF driving. The moving part may be moved during OIS driving. A lens may be coupled to the moving part.

The lens driving device **10** may comprise an OIS moving part. The moving part may comprise an OIS moving part. The OIS moving part may be disposed in the fixed part **100.** The OIS moving part may be disposed within the fixed part **100.** The OIS moving part may be disposed on the fixed part **100.** The OIS moving part may be disposed between the fixed part **100** and the AF moving part **400.** The OIS moving part may be movably disposed. The OIS moving part may move in a direction perpendicular to an optical axis against the fixed part **100** by the OIS driving part. The OIS moving part may move during OIS driving.

The lens driving device **10** may comprise an OIS-x moving part **200.** The OIS moving part may comprise an OIS-x moving part **200.** The OIS-x moving part **200** may be disposed in the fixed part **100.** The OIS-x moving part **200** may be disposed within the fixed part **100.** The OIS-x moving part **200** may be disposed on the fixed part **100.** The OIS-x moving part **200** may be disposed between the fixed part **100** and the AF moving part **400.** The OIS-x moving part **200** may be disposed between the fixed part **100** and the OIS-y moving part **300.** The OIS-x moving part **200** may be movably disposed. The OIS-x moving part **200** can move in an x-axis direction perpendicular to the optical axis against the fixed part **100** by the OIS-x driving part **500.** The OIS-x moving part **200** can move during OIS driving.

The lens driving device **10** may comprise an OIS-x carrier **210.** The OIS-x moving part **200** may comprise an OIS-x carrier **210.** The OIS-x carrier **210** may be an 'OIS-x holder'. The OIS-x carrier **210** may be a 'housing'. The OIS-x carrier **210** may be disposed outside the AF carrier **410.** The OIS-x carrier **210** may be disposed within the base **110.** The OIS-x carrier **210** may be disposed on the base **110.** The OIS-x carrier **210** may be disposed within the cover **140.** The OIS-x carrier **210** may be disposed between the base **110** and the OIS-y carrier **310.** The OIS-x carrier **210** may be disposed between the AF carrier **410** and the base **110.** The OIS-x carrier **210** may be disposed between the AF carrier **410** and the cover **120.** The OIS-x carrier **210** may be movably disposed in an x-axis direction perpendicular to the optical axis.

The first moving part **200** may comprise a first portion being disposed on the outside of the fixed part **100.** At least a portion of the first moving part **200** may be disposed on the outside of the fixed part **100.** An AF guide ball **830** may be disposed between the first portion of the first moving part **200** and the fixed part **100.** The OIS-x carrier **210** may comprise a first portion being disposed on the outside of the base **110.** At least a portion of the OIS-x carrier **210** may be disposed on the outside of the pillar portion of the base **110.** The OIS-x carrier **210** may comprise a first portion being disposed on the outside of the pillar portion of the base **110.** The pillar portion of the base **110** may be extended upward from a lower plate **111** of the base **110.**

The OIS-x carrier **210** may comprise a groove **211.** The groove **211** may be an 'OIS-x guide ball accommodating groove'. The groove **211** may be formed on a side plate of the OIS-x carrier **210.** The groove **211** may be formed on an inner surface of the side plate of the OIS-x carrier **210.** An OIS-x guide ball **810** may be disposed in the groove **211.** The groove **211** may be in direct contact with the OIS-x guide ball **810.** The groove **211** may be disposed in a direction perpendicular to the optical axis. The groove **211** may be disposed in an x-axis direction. The groove **211** may guide the OIS-x guide ball **810** to move in an x-axis direction. The groove **211** may comprise a plurality of grooves. The groove **211** may comprise four groove portions. The groove **211** may comprise a first groove portion being in contact with the OIS-x guide ball **810** at two points, and a second groove portion being in contact with the OIS-x guide ball **810** at one point. In a modified embodiment, both the first groove portion and the second groove portion may be in contact with the OIS-x guide ball **810** at two points.

The OIS-x carrier **210** may comprise a groove **212.** The groove **212** may be an 'OIS-y guide ball accommodating groove'. The groove **212** may be formed on a side plate of the OIS-x carrier **210.** The groove **212** may be formed on an inner surface of the side plate of the OIS-x carrier **210.** An OIS-y guide ball **820** may be disposed in the groove **212.** The groove **212** may be in direct contact with the OIS-y guide ball **820.** The groove **212** may be disposed in a direction perpendicular to the optical axis. The groove **212** may be disposed in a y-axis direction. The groove **212** may guide the OIS-y guide ball **820** to move in a y-axis direction. The groove **212** may comprise a plurality of grooves. The groove **212** may comprise four groove portions. The groove **212** may comprise a first groove portion being in contact with the OIS-y guide ball **820** at two points, and a second groove portion being in contact with the OIS-y guide ball **820** at one point. In a modified embodiment, both the first groove portion and the second groove portion may be contact with the OIS-y guide ball **820** at two points.

The OIS-x carrier **210** may comprise a first side plate on which the OIS-x guide ball **810** is disposed, and a second side plate on which the OIS-y guide ball **820** is disposed.

The OIS-x carrier **210** may comprise a metal plate **213.** The metal plate **213** may be a 'reinforcing member'. The metal plate **213** may be provided to reinforce the strength of the OIS-x carrier **210.** The metal plate **213** may be disposed on an upper surface of the OIS-x carrier **210.** The metal plate **213** may be disposed on the OIS-x carrier **210** by insert injection.

The OIS-x carrier **210** may comprise a groove **214.** The groove **214** may be a 'metal plate accommodating groove'. A metal plate **213** may be disposed in the groove **214.** The groove **214** may be concavely formed on an upper surface of the OIS-x carrier **210.** The groove **214** may comprise a shape corresponding to the metal plate **213.**

The OIS-x carrier **210** may comprise a groove **215.** The groove **215** may be a 'coil accommodating groove'. The groove **215** may be formed on a side plate of the OIS-x carrier **210.** A coil may be disposed in the groove **215.** An OIS-x coil **520** may be disposed in the groove **215.** An OIS-y coil **620** may be disposed in the groove **215.**

The OIS-x carrier **210** may comprise a hole **216.** The hole **216** may be a 'sensor accommodating hole'. The hole **216** may be formed on an upper plate of the OIS-x carrier **210.** A sensor may be disposed in the hole **216.** An OIS-x sensor **530** may be disposed in the hole **216.** An OIS-y sensor **630** may be disposed in the hole **216.**

Hereinafter, one among a "groove **211**", a "groove **212**", a "groove **214**" and a "groove **215**" of the OIS-x carrier **210** is referred to as a "first groove", the other is referred to as a "second groove", yet the other is referred to as a "third groove", and still yet the other may be referred to as a "fourth groove".

The lens driving device **10** may comprise an OIS-y moving part **300.** The OIS moving part may comprise an OIS-y moving part **300.** The OIS-y moving part **300** may be disposed on the fixed part **100.** The OIS-y moving part **300** may be disposed within the fixed part **100.** The OIS-y moving part **300** may be disposed on the fixed part **100.** The OIS-y moving part **300** may be disposed outside the AF moving part **400.** The OIS-y moving part **300** may be disposed between the AF moving part **400** and the OIS-x moving part **200.** The OIS-y moving part **300** may be disposed within the OIS-x moving part **200.** The OIS-y moving part **300** may be movably disposed. The OIS-y moving part **300** can move in a y-axis direction perpendicular to both the optical axis and the x-axis against the fixed part **100** and the OIS-x moving part **200** by the OIS-y driving part **600.** The OIS-y moving part **300** can move when the OIS is driven.

The lens driving device **10** may comprise an OIS-y carrier **310.** The OIS-y moving part **300** may comprise an OIS-y carrier **310.** The OIS-y carrier **310** may be an 'OIS-y holder'. The OIS-y carrier **310** may be a 'housing'. The OIS-y carrier **310** may be disposed within the OIS-x carrier **210.** The OIS-y carrier **310** may be disposed outside the AF carrier **410.** The OIS-y carrier **310** may be disposed between the AF carrier **410** and the OIS-x carrier **210.** The OIS-y carrier **310** may be disposed within the base **110.** The OIS-y carrier **310** may be disposed on the base **110.** The OIS-y carrier **310** can be disposed within the cover **140.** The OIS-y carrier **310** can be movably disposed in a y-axis direction perpendicular to both the optical axis and the x-axis.

The OIS-y carrier **310** may comprise a groove **311.** The groove **311** may be an 'OIS-y guide ball accommodating groove'. The groove **311** may be formed on a side plate of the OIS-y carrier **310.** The groove **311** may be formed on an outer surface of the side plate of the OIS-y carrier **310.** An OIS-y guide ball **820** may be disposed in the groove **311.** The groove **311** may be in direct contact with the OIS-y guide ball **820.** The groove **311** may be disposed in a direction perpendicular to the optical axis. The groove **311** may be disposed in a y-axis direction. The groove **311** may guide the OIS-y guide ball **820** to move in a y-axis direction. The groove **311** may comprise a plurality of grooves. The groove **311** may comprise four groove portions. The groove **311** may comprise a first groove portion being in contact with the OIS-y guide ball **820** at two points, and a second groove portion being in contact with the OIS-y guide ball **820** at one point. In a modified embodiment, both the first groove portion and the second groove portion may contact the OIS-y guide ball **820** at two points.

The OIS-y carrier **310** may comprise a groove **312.** The groove **312** may be an 'AF guide ball accommodating groove'. The groove **311** may be formed on a side plate of the OIS-y carrier **310.** The groove **311** may be formed on an inner surface of the side plate of the OIS-y carrier **310.** An AF guide ball **830** may be disposed in the groove **312.** The groove **312** may be in direct contact with the AF guide ball **830.** The groove **312** may be disposed in an optical axis direction. The groove **312** may guide the AF guide ball **830** to move in an optical axis direction. The groove **312** may comprise a plurality of grooves. The groove **312** may comprise two grooves. The two grooves may be disposed parallel to each other. The groove **312** may comprise a first groove being in contact with the AF guide ball **830** at two points, and a second groove being in contact with the AF guide ball **830** at one point. In a modified embodiment, both the first groove and the second groove may be in contact with the AF guide ball **830** at two points.

The OIS-y carrier **310** may comprise a metal plate **313.** The metal plate **313** may be a 'reinforcing member'. The metal plate **313** may be provided to reinforce the strength of the OIS-y carrier **310.** The metal plate **313** may be disposed on the upper surface of the OIS-y carrier **310.** The metal plate **313** may be disposed in the OIS-y carrier **310** by insert injection.

The OIS-y carrier **310** may comprise a groove **314.** The groove **314** may be a 'metal plate accommodating groove'. A metal plate **313** may be disposed in the groove **314.** The groove **314** may be concavely formed on an upper surface of the OIS-y carrier **310.** The groove **314** may comprise a shape corresponding to the metal plate **313.**

Hereinafter, one among the "groove **311**", "groove **312**" and "groove **314**" of the OIS-y carrier **310** is referred to as a "first groove", the other is referred to as a "second groove" and yet the other may be referred to as a "third groove".

The lens driving device **10** may comprise an AF moving part **400.** The moving part may comprise an AF moving part **400.** The AF moving part **400** may be disposed on the fixed part **100.** The AF moving part **400** may be disposed within the fixed part **100.** The AF moving part **400** may be disposed on the fixed part **100.** The AF moving part **400** may be disposed within the OIS moving part. The AF moving part **400** may be disposed within the OIS-x moving part **200.** The AF moving part **400** may be disposed within the OIS-y moving part **300.** The AF moving part **400** may be movably disposed. The AF moving part **400** may move in an optical axis direction against the fixed part **100** by the AF driving part **700.** The AF moving part **400** can move in an optical axis direction against the OIS moving part by the AF driving part **700.** The AF moving part **400** can move during AF driving.

The lens driving device **10** may comprise an AF carrier **410.** The AF moving part **400** may comprise an AF carrier **410.** The AF carrier **410** may be an 'AF holder'. The AF carrier **410** may be a 'bobbin'. The AF carrier **410** may be disposed within the base **110.** The AF carrier **410** may be disposed on the base **110.** The AF carrier **410** may be disposed within the cover **120.** The AF carrier **410** may be disposed within the OIS-x carrier **210.** The AF carrier **410** may be disposed within the OIS-y carrier **310.** The AF carrier **410** may be movably disposed. The AF carrier **410** may be movably disposed to move in an optical axis direction.

The AF carrier **410** may comprise a groove **411.** The groove **411** may be an 'AF guide ball accommodating groove'. The groove **411** may be formed on a side surface of the AF carrier **410.** The groove **411** may be formed on an outer side surface of the AF carrier **410.** An AF guide ball **830** may be disposed in the groove **411.** The groove **411** may be in direct contact with the AF guide ball **830.** The groove **411** may be disposed in an optical axis direction. The groove **411** may guide the AF guide ball **830** to move in an optical axis direction. The groove **411** may comprise a plurality of grooves. The groove **411** may comprise two grooves. The two grooves may be disposed parallel to each other. The groove **411** may comprise a first groove being in contact with the AF guide ball **830** at two points, and a second groove being in contact with the AF guide ball **830** at one point. In a modified embodiment, both the first groove and the second groove may come into contact with the AF guide ball **830** at two points.

The AF carrier **410** may comprise a groove. An AF magnet **710** may be disposed in the groove. When viewed from the outside, the AF magnet **710** may be disposed between two grooves **411.**

The lens driving device **10** may comprise a ball cover **412.** The ball cover **412** may be disposed on the AF guide ball **830.** The ball cover **412** may be overlapped with the AF guide ball **830** in an optical axis direction. The ball cover **412** may prevent the AF guide ball **830** from being separated. The ball cover **412** may be disposed on an upper surface of the AF carrier **410.** The ball cover **412** may be disposed at a position corresponding to the groove **411** of the AF carrier **410.** The ball cover **412** may be formed of a metal plate. The ball cover **412** may be formed in a shape that does not interfere with the OIS-y carrier **310.**

The lens driving device **10** may comprise a driving part. The driving part may move a moving part against the fixed part **100.** The driving part may comprise an AF driving part **700.** The driving part may comprise an OIS driving part. The driving part may comprise an OIS-x driving part **500.** The driving part may comprise an OIS-y driving part **600.** The driving part may comprise a coil and a magnet.

The lens driving device **10** may comprise an OIS driving part. The OIS driving part may move the OIS moving part in a direction perpendicular to the optical axis. The OIS driving part may move the OIS-x carrier **210** and the OIS-y carrier **310** in a direction perpendicular to the optical axis. The OIS driving part may move the OIS-x carrier **210** and the OIS-y carrier **310** in a direction perpendicular to the optical axis through electromagnetic force. The OIS driving part may comprise a magnet and a coil.

The lens driving device **10** may comprise an OIS-x driving part **500.** The OIS driving part may comprise an OIS-x driving part **500.** The OIS-x driving part **500** can move the OIS-x moving part **200** in an x-axis direction perpendicular to the optical axis direction. The OIS-x driving part **500** can move the OIS-x carrier **210** in an x-axis direction. The OIS-x driving part **500** can move the OIS-x carrier **210** and the OIS-y carrier **310** in an x-axis direction perpendicular to the optical axis. The OIS-x driving part **500** can move the OIS-x carrier **210** and the OIS-y carrier **310** in an x-axis direction perpendicular to the optical axis through electromagnetic force. The OIS-x driving part **500** may comprise a coil and a magnet.

In the present embodiment, the OIS-x magnet **510** and the OIS-x coil **520** can move the OIS moving part in an x-axis direction perpendicular to the optical axis direction. By the interaction of the OIS-x coil **520** and the OIS-x magnet **510,** the OIS-x carrier **210** and the OIS-y carrier **310** can move in an x-axis direction perpendicular to the optical axis direction. The OIS-x magnet **510,** the OIS-x carrier **210,** and the OIS-y carrier **310** can move integrally in an x-axis direction.

The lens driving device **10** may comprise an OIS-x magnet **510.** The OIS driving part may comprise an OIS-x magnet **510.** The OIS-x magnet **510** may be an 'OIS-x magnet'. The OIS-x magnet **510** may be a permanent magnet. The OIS-x magnet **510** may be disposed in the fixed part **100.** The OIS-x magnet **510** may be disposed in the base **110.** The OIS-x magnet **510** may be fixed to the base **110.** The OIS-x magnet **510** may be coupled to the base **110.** The OIS-x magnet **510** may be attached to the base **110** with an adhesive. The OIS-x magnet **510** may be disposed on the protruding portion **112** of the base **110.** The OIS-x magnet **510** may be spaced apart from the AF magnet **710.** The OIS-x magnet **510** may be disposed within the cover **120.**

The OIS-x magnet **510** can interact with the OIS-x coil **520.** The OIS-x magnet **510** can electromagnetically interact with the OIS-x coil **520.** The OIS-x magnet **510** can be disposed at a position corresponding to the OIS-x coil **520.** The OIS-x magnet **510** and the OIS-x coil **520** can face each other. The OIS-x magnet **510** can face the OIS-x coil **520.** The OIS-x magnet **510** can be overlapped with the OIS-x coil **520** in a direction perpendicular to the optical axis. The OIS-x magnet **510** can be overlapped with the OIS-x coil **520** in a y-axis direction. The OIS-x magnet **510** can move the OIS-x coil **520** in an x-axis direction.

The OIS-x magnet **510** may be a four-pole magnet. The OIS-x magnet **510** may comprise a four-pole magnetizing magnet. The OIS-x magnet **510** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart in a horizontal direction. A neutral portion may be disposed between the first magnet portion and the second magnet portion.

The lens driving device **10** may comprise an OIS-x coil **520.** The OIS driving part may comprise an OIS-x coil **520.** The OIS-x coil **520** may interact with an OIS-x magnet **510.** The OIS-x coil **520** may move in an x-axis direction perpendicular to the optical axis. The OIS-x coil **520** may move in an x-axis direction through interaction with the OIS-x magnet **510.** The OIS-x coil **520** and the OIS-x magnet **510** may face each other. The OIS-x coil **520** may face the OIS-x magnet **510.** The OIS-x coil **520** may be disposed at a position corresponding to the OIS-x magnet **510.** The OIS-x coil **520** can be overlapped with the OIS-x magnet **510** in a direction perpendicular to the optical axis. The OIS-x coil **520** can be overlapped with the OIS-x magnet **510** in a y-axis direction. The OIS-x coil **520** can be disposed on the outer substrate **910.** The OIS-x coil **520** can be disposed in the OIS-x moving part **200.** The OIS-x coil **520** can be disposed in the OIS-x carrier **210.** The OIS-x coil **520** can be disposed in the OIS-x carrier **210** through the inner substrate **720.** The OIS-x coil **520** can move integrally with the OIS-x carrier **210.**

In the present embodiment, the OIS-x coil **520** can move together with the OIS-x moving part **200.** In this case, compared to the comparative example in which the OIS-x magnet **510** is disposed in the OIS-x moving part **200** and moves together, the weight of the moving part is lighter, sowithin that the current consumed for driving the OIS-x can be reduced.

The lens driving device **10** may comprise an OIS-x sensor **530.** The OIS driving part may comprise an OIS-x sensor **530.** The OIS-x sensor **530** may be disposed in an outer substrate **910.** The OIS-x sensor **530** may be disposed in an OIS-x carrier **210.** The OIS-x sensor **530** may be disposed in an OIS-x moving part **200.** The OIS-x sensor **530** may comprise a Hall sensor. The OIS-x sensor **530** may detect an OIS-x magnet **510.** The OIS-x sensor **530** may detect a magnetic force of the OIS-x magnet **510.** The OIS-x sensor **530** may be disposed on an upper side of the OIS magnet **520.** The OIS-x sensor **530** may be overlapped with the OIS-magnet **520** in an optical axis direction. In a modified embodiment, the OIS-x sensor **530** may be disposed within the OIS-x coil **520.** At this time, the OIS-x sensor **530** may be overlapped with the OIS-x coil **520** in an optical axis direction. The OIS-x sensor **530** may face the OIS-x magnet **510.** The OIS-x sensor **530** may be disposed at a position corresponding to the OIS-x magnet **510.** The OIS-x sensor **530** may detect the movement of the OIS-x magnet **510.** The amount of movement or position of the OIS-x magnet **510** detected by the OIS-x sensor **530** may be used for feedback of the shaking hand correction driving in an x-axis direction.

The lens driving device **10** may comprise an OIS-x yoke **540.** The OIS-x yoke **540** may be disposed in the OIS-x magnet **510.** The OIS-x yoke **540** may be disposed between the OIS-x magnet **510** and the OIS-x carrier **210.** The OIS-x yoke **540** may prevent magnetic flux leakage of the OIS-x magnet **510** and enhance interaction with the OIS-x coil **520.**

The lens driving device **10** may comprise an OIS-y driving part **600.** The OIS driving part may comprise an OIS-y driving part **600.** The OIS-y driving part **600** may move the OIS-y moving part **300** in a y-axis direction perpendicular to both the optical axis direction and the x-axis direction. The OIS-y driving part **600** may move the OIS-y carrier **310** in a y-axis direction perpendicular to both the optical axis and the x-axis direction. The OIS-y driving part **600** may move the OIS-y carrier **310** in a y-axis direction perpendicular to both the optical axis and the x-axis direction through electromagnetic force. The OIS-y driving part **600** may comprise a coil and a magnet.

In the present embodiment, the OIS-y magnet **610** and the OIS-y coil **620** can move the OIS moving part in a y-axis direction perpendicular to the optical axis direction and the x-axis direction. By the interaction of the OIS-y coil **620** and the OIS-y magnet **610,** the OIS-Y carrier **310** can move in a y-axis direction perpendicular to both the optical axis direction and the x-axis direction. The OIS-y magnet **610** and the OIS-y carrier **310** can move integrally in a y-axis direction. At this time, the AF carrier **410** can also move integrally with the OIS-y carrier **310** in a y-axis direction.

The lens driving device **10** may comprise an OIS-y magnet **610.** The OIS-y driving part **600** may comprise an OIS-y magnet **610.** The OIS-y magnet **610** may be an 'OIS-y magnet'. The OIS-y magnet **610** may be a permanent magnet. The OIS-y magnet **520** may be disposed in the OIS moving part. The OIS-y magnet **610** may be spaced apart from the OIS-x magnet **510.** The OIS-y magnet **610** may be spaced apart from the AF magnet **710.** The OIS-y magnet **610** may be disposed in the OIS-y moving part **300.** The OIS-y magnet **610** can be disposed on the OIS-y carrier **310.** The OIS-y magnet **610** can be disposed in the lower plate of the OIS-y carrier **310.** The OIS-y magnet **610** can be disposed on the lower plate of the OIS-y carrier **310.** The OIS-y magnet **610** can be disposed on an upper surface of the lower plate of the OIS-y carrier **310.** The OIS-y magnet **610** can be fixed to the OIS-y carrier **310.** The OIS-y magnet **610** can be coupled to the OIS-y carrier **310.** The OIS-y magnet **610** can be attached to the OIS-y carrier **310** with an adhesive. The OIS-y magnet **610** can be disposed within the cover **120.**

The OIS-y magnet **610** can interact with the OIS-y coil **620.** The OIS-y magnet **610** can electromagnetically interact with the OIS-y coil **620.** The OIS-y magnet **610** can be disposed corresponding to the OIS-y coil **620.** The OIS-y magnet **610** and the OIS-y coil **620** can face each other. The OIS-y magnet **610** can face the OIS-y coil **620.** The OIS-y magnet **610** can be overlapped with the OIS-y coil **620** in a direction perpendicular to the optical axis. The OIS-y magnet **610** can be overlapped with the OIS-y coil **620** in an x-axis direction. The OIS-y magnet **610** can move in a y-axis direction.

The OIS-y magnet **610** may be a four-pole magnet. The OIS-y magnet **610** may comprise a four-pole magnetizing magnet. The OIS-y magnet **610** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart in a horizontal direction. A neutral portion may be disposed between the first magnet portion and the second magnet portion.

The lens driving device **10** may comprise an OIS-y coil **620.** The OIS-y driving part **600** may comprise the OIS-y coil **620.** The OIS-y coil **620** may interact with the OIS-y magnet **610.** The OIS-y coil **620** may be disposed at an opposite side of the AF coil **720** with respect to an optical axis. The OIS-y coil **620** may move the OIS-y magnet **610** in a y-axis direction perpendicular to both the optical axis and the x-axis. The OIS-y coil **620** may move the OIS-y magnet **610** in a y-axis direction through interaction with the OIS-y magnet **610.** The OIS-y coil **620** and the OIS-y magnet **610** may face each other. The OIS-y coil **620** can face the OIS-y magnet **610.** The OIS-y coil **620** can be disposed at a position corresponding to the OIS-y magnet **610.** The OIS-y coil **620** can be overlapped with the OIS-y magnet **610** in a direction perpendicular to the optical axis. The OIS-y coil **620** can be overlapped with the OIS-y magnet **610** in an x-axis direction. The OIS-y coil **620** can be disposed in the outer substrate **910.** The OIS-y coil **620** can be disposed in the OIS-x carrier **210.** The OIS-y coil **620** can be disposed in the OIS-x carrier **210** through the outer substrate **910.** The OIS-y coil **620** can be disposed in the OIS-x moving part **200.** The OIS-y coil **620** can move integrally with the OIS-x moving part **200.**

In the present embodiment, the OIS-y coil **620** can move together with the OIS-x moving part **200.** The OIS-y coil **620** can move in an x-axis direction together with the OIS-x moving part **200.** During the OIS-x driving process, the OIS-y coil **620** can move in an x-axis direction together with the OIS-x moving part **200.** The OIS-y coil **620** can be disposed on the OIS-x moving part **200.** The OIS-y coil **620** can be fixed to the OIS-x moving part **200.** The OIS-y coil **620** can be coupled to the OIS-x moving part **200.**

The lens driving device **10** may comprise an OIS-y sensor **630.** The OIS-y driving part **600** may comprise an OIS-y sensor **630.** The OIS-y sensor **630** may be disposed in an outer substrate **910.** The OIS-y sensor **630** may be disposed in an OIS-x carrier **210.** The OIS-y sensor **630** may be disposed in an OIS-x moving part **200.** The OIS-y sensor **630** may comprise a Hall sensor. The OIS-y sensor **630** may detect the OIS-y magnet **610.** The OIS-y sensor **630** may detect a magnetic force of the OIS-y magnet **610.** The OIS-y sensor **630** may be disposed on an upper side of the OIS-y magnet **620.** The OIS-y sensor **630** may be overlapped with the OIS-y magnet **620** in an optical axis direction. In a modified embodiment, the OIS-y sensor **630** may be disposed within the OIS-y coil **620.** At this time, the OIS-y sensor **630** may be overlapped with the OIS-y coil **620** in an optical axis direction. The OIS-y sensor **630** may face the OIS-y magnet **610.** The OIS-y sensor **630** may be disposed at a position corresponding to the OIS-y magnet **610.** The OIS-y sensor **630** may detect the movement of the OIS-y magnet **610.** The amount of movement or position of the OIS-y magnet **610** detected by the OIS-y sensor **630** can be used for feedback of the shaking hand correction drive in a y-axis direction.

The lens driving device **10** may comprise an OIS-y yoke **640.** The OIS-y yoke **640** may be disposed in the OIS-y magnet **610.** The OIS-y yoke **640** may be disposed between the OIS-y magnet **610** and the OIS-y carrier **310.** The OIS-y yoke **640** may prevent magnetic flux leakage of the OIS-y magnet **610** and enhance interaction with the OIS-y coil **620.**

The lens driving device **10** may comprise an AF driving part **700.** The AF driving part **700** may move the AF moving part **400** in an optical axis direction. The AF driving part **700** may move the AF carrier **410** in an optical axis direction. The AF driving part **700** may move the AF carrier **410** in an optical axis direction through electromagnetic force. The AF driving part **700** may comprise a coil and a magnet.

In the present embodiment, the AF carrier **410** can move in an optical axis direction by the interaction between the AF coil **720** and the AF magnet **710.** The AF magnet **710** and the AF carrier **410** can move integrally in an optical axis direction.

The lens driving device **10** may comprise an AF magnet **710.** The AF driving part **700** may comprise an AF magnet **710.** The AF magnet **710** may be an 'AF magnet'. The AF magnet **710** may be a permanent magnet. The AF magnet **710** may be disposed in the AF moving part **400.** The AF magnet **710** may be disposed in the AF carrier **410.** The AF magnet **710** may be disposed on an outer side surface of the AF carrier **410.** The AF magnet **710** may be fixed to the AF carrier **410.** The AF magnet **710** may be coupled to the AF carrier **410.** The AF magnet **710** may be attached to the AF carrier **410** with an adhesive. The AF magnet **710** can be disposed within the cover **120.**

The AF magnet **710** can interact with the AF coil **720.** The AF magnet **710** can electromagnetically interact with the AF coil **720.** The AF magnet **710** can be disposed at a position corresponding to the AF coil **720.** The AF magnet **710** and the AF coil **720** can face each other. The AF magnet **710** can face the AF coil **720.** The AF magnet **710** can be overlapped with the AF coil **720** in a direction perpendicular to the optical axis. The AF magnet **710** can be overlapped with the AF coil **720** in a y-axis direction.

In the present embodiment, the outer surface of the AF magnet **710** may be disposed parallel to the second side plate of the cover **120.** The AF magnet **710** may be disposed parallel to the second side plate of the cover **120.**

The AF magnet **710** may be a four-pole magnet. The AF magnet **710** may comprise a four-pole magnetizing magnet. The AF magnet **710** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be spaced apart in a vertical direction. The first magnet portion and the second magnet portion may be spaced apart in an optical axis direction. A neutral portion may be disposed between the first magnet portion and the second magnet portion.

The lens driving device **10** may comprise an AF coil **720.** The AF driving part **700** may comprise an AF coil **720.** The AF coil **720** may interact with an AF magnet **710.** The AF coil **720** and AF magnet **710** may face each other the. The AF coil **720** may face the AF magnet **710.** The AF coil **720** may be disposed at a position corresponding to the AF magnet **710.** The AF coil **720** may be overlapped with the AF magnet **710** in a direction perpendicular to the optical axis. The AF coil **720** may be disposed in an inner substrate **920.** The AF coil **720** may be disposed in an OIS-y carrier **310.** The AF coil **720** can be disposed on the OIS-y carrier **310** through the inner substrate **920.** The AF coil **720** can move integrally with the OIS-y carrier **310.** The AF coil **720** can be disposed in the OIS-y moving part **300.** The AF coil **720** can move integrally with the OIS-y moving part **300.**

The lens driving device **10** may comprise an AF sensor **730.** The AF driving part **700** may comprise an AF sensor **730.** The AF sensor **730** may be a Hall sensor. The AF sensor **730** may be disposed in the inner substrate **720.** The AF sensor **730** may detect the AF magnet **710.** The AF sensor **730** may detect the movement of the AF magnet **710.** The movement amount or position of the AF magnet **710** detected by the AF sensor **730** may be used for feedback of auto focus driving. The AF sensor **730** may be disposed in the OIS-y moving part **300.** The AF sensor **730** may be disposed in the OIS-y carrier **310.** The AF sensor **730** can be disposed on the OIS-y carrier **310** through the inner substrate **720.** The AF sensor **730** can move together with the OIS-y moving part **300.**

The AF sensor **730** may be a driver IC. The driver IC may comprise a sensing unit. The sensing unit may comprise a Hall element (Hall IC). The driver IC may be electrically connected to the AF coil **720.** The driver IC may supply current to the AF coil **720.**

The AF sensor **730** may be disposed within the AF coil **720.** The AF sensor **730** may be overlapped with the neutral portion of the AF magnet **710** in a direction perpendicular to the optical axis. In a modified embodiment, the AF sensor **730** may be disposed on an outside of the AF coil **720.**

The lens driving device **10** may comprise an AF yoke **740.** The AF yoke **740** may be disposed at a position corresponding to the AF magnet **710.** The AF yoke **740** may be disposed in the AF magnet **710.** The AF yoke **740** may be disposed between the AF magnet **710** and the AF carrier **410.** The AF yoke **740** may be disposed on an inner surface of the AF magnet **710.** The AF yoke **740** may be disposed on an outer surface of the AF carrier **410.** Through this, the AF yoke **740** may minimize the leakage magnetic flux of the AF magnet **710** and increase the electromagnetic interaction force between the AF magnet **710** and the AF coil **720.**

When viewed from above, the OIS-x coil **520,** the OIS-x magnet **510,** the AF magnet **710,** and the AF coil **720** can be disposed in sequence on a virtual straight line. When viewed from above, the OIS-x coil **520,** the OIS-x magnet **510,** the AF magnet **710,** and the AF coil **720** can be disposed in sequence. When viewed from above, the OIS-x coil **520,** the OIS-x magnet **510,** the AF magnet **710,** and the AF coil **720** can be disposed in sequence in a y-axis direction. When viewed from above, the OIS-x coil **520,** the OIS-x magnet **510,** the AF magnet **710,** and the AF coil **720** can be overlapped in a y-axis direction.

In the present embodiment, the cover **120** may comprise a first side plate and a second side plate being disposed opposite to each other, and a third side plate and a fourth side plate being disposed opposite to each other. An OIS-x driving part **500** may be disposed at a position corresponding to the first side plate of the cover **120,** an AF driving part **700** may be disposed at a position corresponding to the third side plate of the cover **120,** and an OIS-y driving part **600** may be disposed at a position corresponding to the second side plate of the cover **120.**

The lens driving device **10** may comprise a guide member. The guide member may comprise a ball. The guide member may comprise a pin. The guide member may comprise a cylindrical member. The guide member may guide movement of the moving part relative to the fixed part **100** in a specific direction.

The lens driving device **10** may comprise an OIS-x guide ball **810.** The OIS-x guide ball **810** may guide movement of the OIS-x moving part **200** against the fixed part **100** in an x-axis direction. The OIS-x guide ball **810** may guide movement of the OIS-x carrier **210** against the base **110** in an x-axis direction. The OIS-x guide ball **810** may be disposed between the fixed part **100** and the OIS-x moving part **200.** The OIS-x guide ball **810** may be disposed between the fixed part **100** and the OIS-x moving part **200** in a y-axis direction. The OIS-x guide ball **810** may be disposed between the base **110** and the OIS-x carrier **210.** The OIS-x guide ball **810** can be disposed between the base **110** and the OIS-x carrier **210** in a y-axis direction. The entire area from the lower end to the upper end of the OIS-x guide ball **810** can be overlapped with both the base **110** and the OIS-x carrier **210** in a y-axis direction. The entire area of the OIS-x guide ball **810** can be overlapped with the base **110** and the OIS-x carrier **210** in a y-axis direction. The OIS-x guide ball **810** can be disposed between the outer side surface of the base **110** and the inner side surface of the OIS-x carrier **210.** When viewed from the inner side of the OIS-x carrier **210,** the OIS-x guide ball **810** can be overlapped with the OIS-x magnet **510** in a horizontal direction.

The OIS-x guide ball **810** may be disposed in a groove **112** of the base **110.** The OIS-x guide ball **810** may be disposed in a groove **211** of the OIS-x carrier **210.** The OIS-x guide ball **810** may comprise a first ball being in contact with the base **110** and the OIS-x carrier **210** at four points, and a second ball being in contact with the base **110** and the OIS-x carrier **210** at three points. The OIS-x guide ball **810** may be spherical. The OIS-x guide ball **810** may be formed of metal. Grease may be applied to a surface of the OIS-x guide ball **810.**

The OIS-x guide ball **810** may comprise a plurality of balls. The OIS-x guide ball 810 may comprise four balls. Two OIS-x guide balls **810** may be disposed on one side of the OIS-x magnet **510,** and the remaining two OIS-x guide balls **810** may be disposed on the other side of the OIS-x magnet **510.**

The lens driving device **10** may comprise an OIS-y guide ball **820.** The OIS-y guide ball **820** may guide the movement of the OIS-y carrier **310** against the OIS-x carrier **210** in a y-axis direction. The OIS-y guide ball **820** may be disposed between the OIS-x moving part **200** and the OIS-y moving part **300.** The OIS-y guide ball **820** may be disposed between the OIS-x moving part **200** and the OIS-y moving part **300** in an x-axis direction. The OIS-y guide ball **820** may be disposed between the OIS-x carrier **210** and the OIS-y carrier **310.** The OIS-y guide ball **820** can be disposed between the OIS-x carrier **210** and the OIS-y carrier **310** in an x-axis direction. The entire area from the lower end to the upper end of the OIS-y guide ball **820** can be overlapped with both the OIS-x carrier **210** and the OIS-y carrier **310** in an x-axis direction. The OIS-y guide ball **820** can be disposed between an inner side surface of the OIS-x carrier **210** and the outer side surface of the OIS-y carrier **310.** When viewed from the outer side of the OIS-y carrier **310,** the OIS-y guide ball **820** can be overlapped with the OIS-y magnet **610** in a horizontal direction. Here, the horizontal direction can be any direction perpendicular to the optical axis.

A part of the OIS-y guide ball **820** may be overlapped with the OIS-x carrier **210** in a y-axis direction. Another part of the OIS-y guide ball **820** may be overlapped with the OIS-y carrier **310** in a y-axis direction.

The OIS-y guide ball **820** may be disposed in the groove **212** of the OIS-x carrier **210.** The OIS-y guide ball **820** may be disposed in the groove **311** of the OIS-y carrier **310.** The OIS-y guide ball **820** may comprise a first ball being in contact with the OIS-x carrier **210** and the OIS-y carrier **310** at four points, and a second ball being in contact with the OIS-x carrier **210** and the OIS-y carrier **310** at three points. The OIS-y guide ball **820** may be spherical. The OIS-y guide ball **820** may be formed of metal. Grease may be applied to the surface of the OIS-y guide ball **820.**

The OIS-y guide ball **820** may comprise a plurality of balls. The OIS-y guide ball **820** may comprise four balls. Two OIS-y guide balls **820** may be disposed on one side of the OIS-y magnet **610,** and the remaining two OIS-y guide balls **820** may be disposed on the other side of the OIS-y magnet **610.**

The lens driving device **10** may comprise an AF guide ball **830.** The AF guide ball 830 may guide movement of the AF carrier **410** against the OIS-y carrier **310** in an optical axis direction. The AF guide ball **830** may be disposed between the OIS-y moving part **300** and the AF moving part **400.** The AF guide ball **830** may be disposed between the OIS-y moving part **300** and the AF moving part **400** in a y-axis direction. The AF guide ball **830** may be disposed between the OIS-y carrier **310** and the AF carrier **410.** The AF guide ball **830** may be disposed between the OIS-y carrier **310** and the AF carrier **410** in a y-direction. The AF guide ball **830** may be disposed in the groove **312** of the OIS-y carrier **310.** The AF guide ball **830** may be disposed in the groove **411** of the AF carrier **410.** The AF guide ball **830** may be spherical. The AF guide ball **830** may be formed of metal. Grease may be applied to the surface of the AF guide ball **830.**

The AF guide ball **830** may comprise a plurality of balls. The AF guide ball **830** may comprise four balls. Two AF guide balls **830** may be disposed at one side of the AF magnet **710** and the remaining two AF guide balls **830** may be disposed at the other side of the AF magnet **710.**

The lens driving device **10** may comprise a guide ball pressurizing member. The guide ball pressurizing member may pressurize the guide balls **810, 820,** and **830.** The guide ball pressurizing member may maintain the state in which the guide balls **810, 820,** and **830** are in contact between two other members.

The lens driving device **10** may comprise an OIS-x ball pressurizing yoke **860.** The OIS-x ball pressurizing yoke **860** may pressurize the OIS-x guide ball **810.** The OIS-x ball pressurizing yoke **860** may allow the OIS-x guide ball **810** to remain in contact with the fixed part **100** and the OIS-x moving part **200.** The OIS-x ball pressurizing yoke **860** may allow the OIS-x guide ball **820** to remain in contact with the base **110** and the OIS-x carrier **210.** The OIS-x ball pressurizing yoke **860** may be disposed to exert an attractive force on the OIS-x magnet **510.** The OIS-x ball pressurizing yoke **860** may be disposed on an outer surface of the outer substrate **910.** The OIS-x ball pressurizing yoke **860** can be disposed on the OIS-x moving part **200.**

The lens driving device **10** may comprise an OIS-y ball pressurizing yoke **870.** The OIS-y ball pressurizing yoke **870** may pressurize the OIS-y guide ball **820.** The OIS-y ball pressurizing yoke **870** may allow the OIS-y guide ball **820** to be maintained in contact with the OIS-x moving part **200** and the OIS-y moving part **300.** The OIS-y ball pressurizing yoke **870** may allow the OIS-x guide ball **820** to be maintained in contact with the OIS-x carrier **210** and the OIS-y carrier **310.** The OIS-y ball pressurizing yoke **870** may be disposed to exert an attractive force on the OIS-y magnet **610.** The OIS-y ball pressurizing yoke **870** can be disposed on an outer surface of the outer substrate **910.** The OIS-y ball pressurizing yoke **870** can be disposed in the OIS-x moving part **200.**

The lens driving device **10** may comprise an AF ball pressurizing yoke **880.** The AF ball pressurizing yoke **880** may pressurize the AF guide ball **830.** The AF ball pressurizing yoke **880** may allow the AF guide ball **830** to be maintained in contact with the OIS-y moving part **300** and the AF moving part **400.** The AF ball pressurizing yoke **880** may allow the AF guide ball **830** to be maintained in contact with the OIS-y carrier **310** and the AF carrier **410.** The AF ball pressurizing yoke **880** may be disposed to exert attractive force on the AF magnet **710.** The AF ball pressurizing yoke **880** may be disposed on an outer surface of the inner substrate **920.** The AF ball pressurizing yoke **880** may be disposed in the OIS-y moving part **300.**

The lens driving device **10** may comprise substrates **910** and **920.** The substrates **910** and **920** may comprise a flexible printed circuit board FPCB. The substrates **910** and **920** may be electrically connected to the coils **520, 620,** and **720.** The substrates **910** and **920** may be electrically connected to the sensors **530, 630,** and **730.**

The lens driving device **10** may comprise an outer substrate **910.** The outer substrate **910** may be disposed in the base **110** and the OIS-x carrier **210.** The outer substrate **910** may connect the base **110** and the OIS-x carrier **210.** The outer substrate **910** may elastically connect the base **110** and the OIS-x carrier **210.** The outer substrate **910** may movably support the OIS-x carrier **210** against the base **110.** The outer substrate **910** may be electrically connected to the OIS-x coil **520.** The outer substrate **910** may be electrically connected to the OIS-y coil **620.** The outer substrate **910** may be electrically connected to the OIS-x sensor **530.** The outer substrate **910** may be electrically connected to the OIS-y sensor **630.** The outer substrate **910** may comprise a flexible substrate. The outer substrate **910** may comprise a flexible printed circuit board (FPCB). The outer substrate **910** may comprise an elastic portion. The outer substrate **910** may comprise an elastic member.

The outer substrate **910** may comprise an outer portion **911.** The outer portion **911** may be disposed on the fixed part **100.** The outer portion **911** may be disposed in the base **110.** The outer portion **911** may be disposed on a side surface of the base **110.** The outer portion **911** may be disposed on a lower plate **111** of the base **110.** The outer portion **911** may be disposed on two side surfaces of the base **110.** The outer portion **911** may comprise two terminal portions. The two terminal portions may be disposed opposite to each other with respect to an optical axis. The terminal portion may comprise a terminal **862-1.**

The outer substrate **910** may comprise a terminal **911a.** The outer portion **911** of the outer substrate **910** may comprise a terminal **911a.** The terminal **911a** may be disposed at a lower end of the base **110.** The terminal **911a** may be coupled to a printed circuit board **50.** The terminal **911a** may be coupled to a terminal of the printed circuit board **50** via a solder. The terminal **911a** may be coupled to a terminal of the printed circuit board **50** via a conductive member. The terminal **911a** may be connected to a terminal of the printed circuit board **50.** The terminal **911a** may be electrically connected to a terminal of the printed circuit board **50.**

The outer substrate **910** may comprise an inner portion **912.** The inner portion **912** may be disposed in an OIS-x moving part **200.** The inner portion **912** may be disposed in an OIS-x carrier **210.** A coil may be disposed in the inner portion **912.** An OIS-x coil **520** may be disposed in the inner portion **912.** An OIS-y coil **620** may be disposed in the inner portion **912.** A sensor may be disposed in the inner portion **912.** An OIS-x sensor **530** may be disposed in the inner portion **912.** An OIS-y sensor **630** may be disposed in the inner portion **912.** The inner portion **912** may comprise a first region where an OIS-x coil **520** is disposed, a second region where the OIS-y coil **620** is disposed, a third region where the OIS-x sensor **530** is disposed, and a fourth region where the OIS-y sensor **630** is disposed.

The outer substrate **910** may comprise a connecting portion **913.** The connecting portion **913** may be an 'extension portion'. The connecting portion **913** may be a 'leg portion'. The connecting portion **913** may connect the outer portion **911** and the inner portion **912.** The connecting portion **913** may be extended from the outer portion **911.** At least a portion of the connecting portion **913** may move together with the OIS-x carrier **210.** At least a portion of the connecting portion **913** may be disposed parallel to an optical axis direction. At least a portion of the connecting portion **913** of the outer substrate **910** may be movably formed in an x-axis direction. The connecting portion **913** may comprise a flexible substrate. The connecting portion **913** may be flexible. The connecting portion **913** may comprise a flexible printed circuit board (FPCB). The connecting portion **913** may comprise an elastic portion. The connecting portion **913** may comprise an elastic member.

The lens driving device **10** may comprise an inner substrate **920.** The inner substrate **920** may be electrically connected to the AF coil **720.** The inner substrate **920** may be electrically connected to the AF sensor **730.** The inner substrate **920** may be disposed in the fixed part **100.** The inner substrate **920** may be disposed in the OIS-y moving part **300.** The inner substrate **920** may connect the base **110** and the OIS-y carrier **310.** The inner substrate **920** may elastically connect the base **110** and the OIS-y carrier **310.** The inner substrate **920** may movably support the OIS-y carrier **310** against the base **110.** The inner substrate **920** may comprise a flexible substrate. The inner substrate **920** may comprise a flexible printed circuit board (FPCB). The inner substrate **920** may comprise an elastic portion. The inner substrate **920** may comprise an elastic member.

The inner substrate **920** may comprise an outer portion **921.** The outer portion **921** may be disposed in the fixed part **100.** The outer portion **921** may be disposed in the base **110.** The outer portion **921** may be disposed on a side surface of the base **110.** The outer portion **921** may be disposed 1n a lower plate **111** of the base **110.**

The inner substrate **920** may comprise a terminal **921a.** The outer portion **921** may comprise a terminal **921a.** The outer portion **921** of the inner substrate **920** may comprise a terminal **921a.** The terminal **921a** may be disposed at a lower end of the base **110.** The terminal **921a** may be coupled to a printed circuit board **50.** The terminal **921a** may be coupled to a terminal of the printed circuit board **50** via a solder. The terminal **921a** may be coupled to a terminal of the printed circuit board **50** via a conductive member. The terminal **921a** may be connected to a terminal of the printed circuit board **50.** The terminal **921a** may be electrically connected to a terminal of the printed circuit board **50.**

The inner substrate **920** may comprise an inner portion **922.** The inner portion **922** may be disposed in an OIS-y moving part **300.** The inner portion **922** may be disposed in an OIS-y carrier **310.** A coil may be disposed in the inner portion **922.** An AF coil **720** may be disposed in the inner portion **922.** A sensor may be disposed in the inner portion **912.** An AF sensor **730** may be disposed in the inner portion **922.** The inner portion **922** may comprise a first region in which the AF coil **720** is disposed and a second region in which the AF sensor **730** is disposed.

The inner substrate **920** may comprise a connecting portion **923.** The connecting portion **923** may be an 'extension portion'. The connecting portion **923** may be a 'leg portion'. The connecting portion **923** may connect the outer portion **921** and the inner portion **922.** The connecting portion **923** may be extended from the outer portion **921.** At least a portion of the connecting portion **923** may move together with the OIS-y carrier **310.** At least a portion of the connecting portion **923** may be disposed parallel to an optical axis direction. At least a portion of the connecting portion **923** of the inner substrate **920** may be movably formed in an x-axis direction. At least a portion of the connecting portion **923** of the inner substrate **920** may be movably formed in a y-axis direction. The connecting portion **923** may comprise a flexible substrate. The connecting portion **923** may have flexibility. The connecting portion 923 may comprise a flexible printed circuit board (FPCB). The connecting portion **923** may comprise an elastic portion. The connecting portion **923** may comprise an elastic member. At least a portion of the connecting portion **923** of the inner substrate **920** may be movably formed in an x-axis direction and a y-axis direction.

The connecting portion **923** may comprise an x-axis moving connecting portion **923-1.** The x-axis moving connecting portion **923-1** may movably support the OIS-y moving part **300** in an x-axis direction. The x-axis moving connecting portion **923-1** may movably support the OIS-y carrier **310** in an x-axis direction. The x-axis moving connecting portion **923-1** may be disposed parallel to a y-axis. The x-axis moving connecting portion **923-1** may be disposed parallel to an optical axis. The x-axis moving connecting portion **923-1** may comprise first to third portions overlapping in the optical axis direction. The x-axis moving connecting portion **923-1** may comprise a bent shape.

The connecting portion **923** may comprise a y-axis moving connecting portion **923-2.** The y-axis moving connecting portion **923-2** may movably support the OIS-y moving part **300** in a y-axis direction. The y-axis moving connecting portion **923-2** may movably support the OIS-y carrier **310** in a y-axis direction. The y-axis moving connecting portion **923-2** may be disposed parallel to an x-axis. The y-axis moving connecting portion **923-2** may be disposed parallel to an optical axis. The y-axis moving connecting portion **923-2** may be overlapped with the inner portion **922** in an optical axis direction. The y-axis moving connecting portion **923-2** may comprise a bent shape.

Hereinafter, one of the "x-axis flow connecting portion 923-1" and the "y-axis flow connecting portion 923-2" may be referred to as a "first connecting portion" and the other may be referred to as a "second connecting portion".

Hereinafter, the configuration of a lens driving device according to a modified embodiment is described with reference to the drawings.

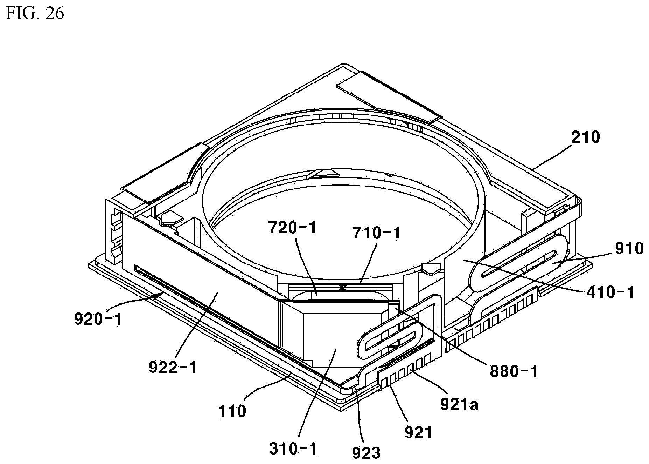

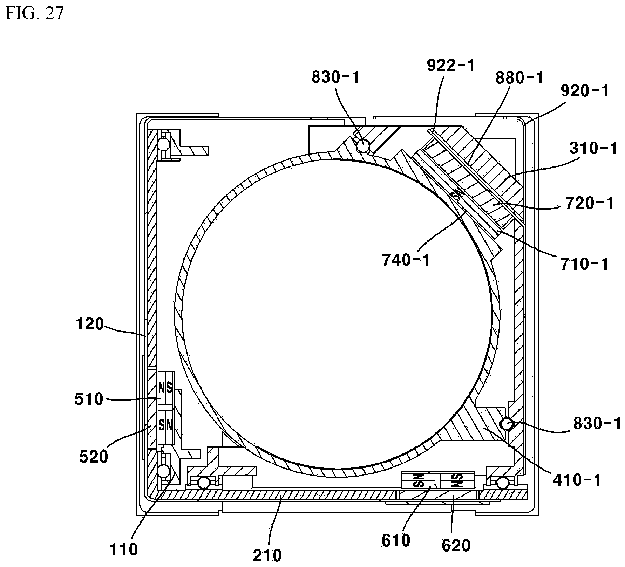

FIG. 26 is a perspective view of the lens driving device according to a modified example with the cover omitted, FIG. 27 is a cross-sectional view of FIG. 26 cut in a direction perpendicular to the optical axis and viewed from above.

In a modified embodiment, the OIS-y carrier **310-1** may comprise a side wall on which the AF coil **720-1** is disposed.

The cover **120** may comprise first and second side plates being disposed opposite each other, and third and fourth side plates being disposed opposite each other. As illustrated in FIG. 27, when viewed from above, the outer surface of the AF magnet **710-1** may be inclinedly disposed between the second and fourth side plates of the cover **120.** The AF magnet **710-1** may be inclinedly disposed between the side plates of the cover **120.** The AF coil **720-1** may be inclinedly disposed between the side plates of the cover **120.** The AF yoke **740-1** may be inclinedly disposed between the side plates of the cover **120.** The AF ball pressurization yoke **880-1** may be inclinedly disposed between the side plates of the cover **120.**

The position of the AF guide ball **830-1** may be changed compared to the present embodiment. One set of AF guide balls **830-1** may be moved and disposed toward the center compared to the present embodiment. The structure of the AF carrier **830-1** on which the AF guide ball **830-1** is disposed may also be changed.

The inner substrate **920-1** may comprise a first portion **922-1** being disposed on a side wall of the OIS-y carrier **310-1.** The AF coil **720-1** may be disposed in the first portion **922-1** of the inner substrate **920-1.** The AF ball pressurizing yoke **880-1** may be disposed in the first portion **922-1** of the inner substrate **920-1.**

In a modified embodiment, the AF magnet **710-1** and the AF coil **720-1** can be inclinedly disposed in the corner area. In a modified embodiment, the AF magnet **710-1** and the AF coil **720-1** can be disposed not parallel to the side plate **122** of the cover **120,** thereby securing more space within the cover **120.** Through this, a greater driving force can be obtained in a modified embodiment compared to the present embodiment.

Hereinafter, the auto focus (AF) driving of the lens driving device according to the present embodiment is described with reference to the drawings.

FIGS. 28 to 30 are diagrams for explaining the auto focus driving of a lens driving device according to the present embodiment. FIG. 28 is a cross-sectional view illustrating the appearance of a moving part in an initial state where no current is applied to the AF coil. FIG. 29 is a cross-sectional view illustrating the appearance where a moving part moves upward in an optical axis direction when a forward current is applied to an AF coil. FIG. 30 is a cross-sectional view illustrating the appearance where a moving part moves downward in an optical axis direction when a reverse current is applied to an AF coil.

As illustrated in FIG. 28, the moving part may be disposed at a position spaced apart from both the top plate **121** of the cover **120** and the base **110** in the initial position where no current is applied to the AF coil **720.** At this time, the moving part may be an AF moving part **400.**

When a positive current is applied to the AF coil **720,** the AF magnet **710** can move upward in an optical axis direction due to the electromagnetic interaction between the AF coil **720** and the AF magnet **710** (see **A** of FIG. 29). At this time, the AF carrier **410** can move upward in an optical axis direction together with the AF magnet **710.** Furthermore, the lens can move upward in an optical axis direction together with the AF carrier **410.** Accordingly, the distance between the lens and the image sensor can be changed, and the focus of the image being formed on the image sensor through the lens can be adjusted.

When a reverse current is applied to the AF coil **720,** the AF magnet **710** can move downward in an optical axis direction due to the electromagnetic interaction between the AF coil **720** and the AF magnet **710** (see **B** of FIG. 30). At this time, the AF carrier **410** can move downward in an optical axis direction together with the AF magnet **710.** Furthermore, the lens can move downward in an optical axis direction together with the AF carrier **410.** Accordingly, the distance between the lens and the image sensor can be changed, and the focus of the image being formed on the image sensor through the lens can be adjusted.

Meanwhile, during the movement process of the AF magnet **710,** the AF sensor **730** can detect the amount of movement or position of the lens in an optical axis direction by detecting the strength of the magnetic field of the AF magnet **710.** The amount of movement or position of the lens in an optical axis direction detected by the AF sensor **730** can be used for auto focus feedback control.

Hereinafter, the optical image stabilization (OIS) driving of a lens driving device according to the present embodiment will be described with reference to the drawings.

FIGS. 31 to 33 are diagrams for explaining the shaking hand correction driving of a lens driving device according to the present embodiment. FIG. 31 is a cross-sectional view illustrating the appearance of an OIS moving part in an initial state in which no current is applied to an OIS-x coil and an OIS-y coil; FIG. 32 is a cross-sectional view illustrating the appearance in which an OIS moving part moves in an x-axis direction perpendicular to the optical axis when current is applied to the OIS-x coil; and FIG. 33 is a cross-sectional view illustrating the appearance in which the OIS-y moving part moves in a y-axis direction perpendicular to both the optical axis and the x-axis when current is applied to an OIS-y coil.

As illustrated in FIG. 31, the moving part may be disposed at an initial position where no current is applied to the OIS-x coil **520** and the OIS-y coil **620.** At this time, the moving part may be an OIS moving part. The moving part may be an OIS-x moving part **200** and an OIS-y moving part **300.** Furthermore, the moving part may comprise an OIS-x moving part **200,** an OIS-y moving part **300,** and an AF moving part **400.**

When a current is applied to the OIS-x coil **520,** the OIS-x magnet **510** may move in an x-axis direction perpendicular to the optical axis by an electromagnetic interaction between the OIS-x coil **520** and the OIS-x magnet **510** (see **A** of FIG. 32). At this time, the OIS-x carrier **210** may move in an x-axis direction together with the OIS-x coil **520.** Furthermore, the OIS-y carrier **310,** AF carrier **410,** and the lens may move in an x-axis direction together with the OIS-x carrier **210.** In more detail, when a forward current is applied to the OIS-x coil **520,** the OIS-x coil **520,** the OIS-x carrier **210,** the OIS-y carrier **310,** AF carrier **410,** and the lens may move in one direction on the x-axis. Furthermore, when a reverse current is applied to the OIS-x coil **520,** OIS-x coil **520,** OIS-x carrier **210,** OIS-y carrier 310, AF carrier **410,** and the lens may move in the other direction on an x-axis.

When a current is applied to the OIS-y coil **620,** the OIS-y magnet **610** may move in a y-axis direction perpendicular to the optical axis by an electromagnetic interaction between the OIS-y coil **620** and the OIS-y magnet **610** (see **B** of FIG. 33). At this time, the OIS-y carrier **310** may move in a y-axis direction together with the OIS-y magnet **610.** Furthermore, the lens may move in a y-axis direction together with the OIS-y carrier **310.** More specifically, when a forward current is applied to the OIS-y coil **620,** the OIS-y magnet **610,** the OIS-y carrier **310,** the AF carrier **410,** and the lens may move in one direction on a y-axis. In addition, when a reverse current is applied to the OIS-y coil **620,** the OIS-y magnet **610,** the OIS-y carrier **310,** the AF carrier **410,** and the lens may move in the other direction on the y-axis.

Meanwhile, the OIS-x sensor **530** may detect the strength of the magnetic field of the OIS-x magnet **510** and detect the relative movement amount or position of the OIS-x coil **520.** The movement amount or position detected by the OIS-x sensor 530 may be used for shaking hand correction feedback control in an x-axis direction. The OIS-y sensor **630** may detect the strength of the magnetic field of the OIS-y magnet **610** and detect the movement amount or position of the OIS-y magnet **610.** The movement amount or position detected by the OIS-y sensor **630** may be used for shaking hand correction feedback control in a y-axis direction.

Hereinafter, a camera device according to the present embodiment is described with reference to the drawings.

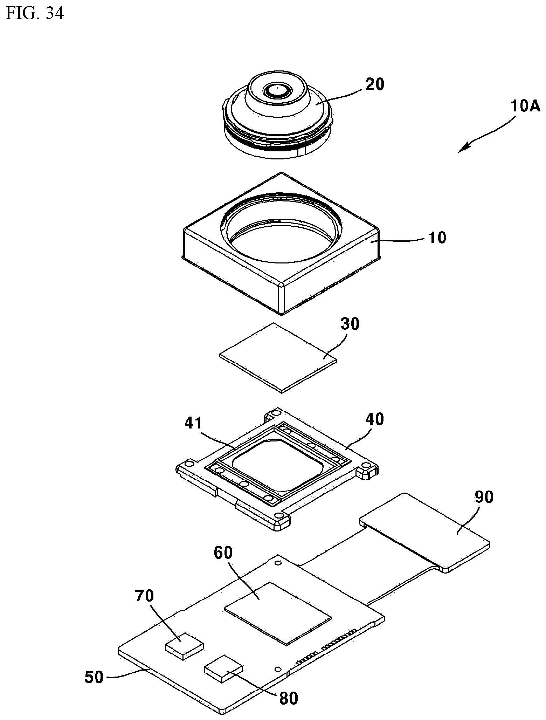

FIG. 34 is an exploded perspective view of a camera device according to the present embodiment.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to an AF carrier **410** of the lens driving device **10.** The lens module **20** may be coupled to the AF carrier **410** by screw-coupling and/or adhesive. The lens module **20** may be moved integrally with the AF carrier **410.**

The camera device **10A** may comprise a filter **30.** The filter **30** may block light of a specific frequency band from passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light in an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruding portion **41** in which a filter **30** is disposed. An opening may be formed in a portion of the sensor base **40** in which the filter **30** is disposed so that light passing through the filter **30** may be incident on the image sensor **60.** An adhesive member may couple or attach the base **110** of the lens driving device **10** to the sensor base **40.** The adhesive member may additionally serve to prevent foreign substances from entering the interior of the lens driving device **10.** The adhesive member may comprise at least one among an epoxy, a thermosetting adhesive, and an ultraviolet-curable adhesive.

The camera device **10A** may comprise a printed circuit board (PCB) **50.** The printed circuit board **50** may be a substrate or a circuit board. A lens driving device **10** may be disposed in the printed circuit board **50.** A sensor base **40** may be disposed between the printed circuit board **50** and the lens driving device **10.** The printed circuit board **50** may be electrically connected to the lens driving device **10.** An image sensor **60** may be disposed in the printed circuit board **50.** Various circuits, elements, control units, and the like may be provided in the printed circuit board **50** to convert an image being formed on the image sensor **60** into an electrical signal and transmit it to an external device.

The camera device **10A** may comprise an image sensor **60.** The image sensor **60** may be configured such that light passing through a lens and a filter **30** is incident to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light being irradiated to the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided in the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed in a printed circuit board **50.** The control unit **80** may be electrically connected to a coil **330** of a lens driving device **10.** The control unit **80** may individually control the direction, intensity, and amplitude of current supplied to the coil **330.** The control unit **80** may control the lens driving device **10** to perform an auto-focus function and/or a shaking hand correction function. Furthermore, the control unit **80** may perform auto-focus feedback control and/or shaking hand correction feedback control for the lens driving device **10.**

The camera device **10A** may comprise a connector **90.** The connector **90** may be electrically connected to a printed circuit board **50.** The connector **90** may comprise a port for being electrically connected to an external device.

Hereinafter, an optical device according to the present embodiment is described with reference to drawings.

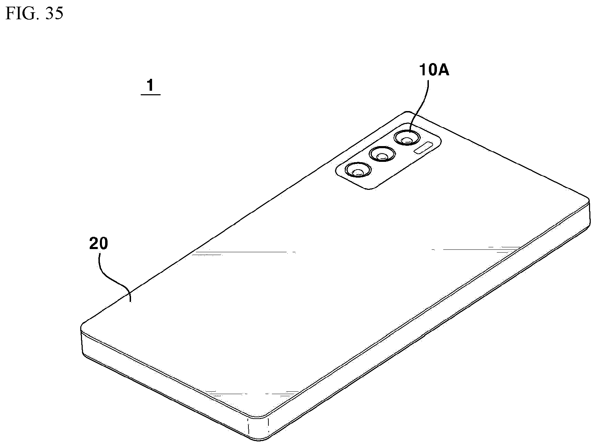

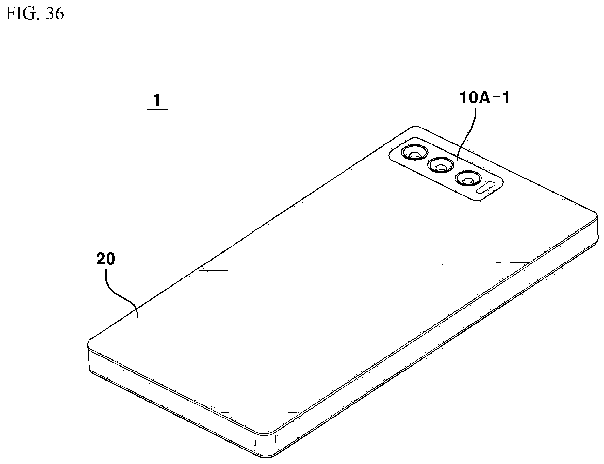

FIG. 35 is a perspective view of an optical device according to the present embodiment; and FIG. 36 is a perspective view of an optical device according to a modified embodiment.

The optical device **1** may comprise any one or more among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device **1** may comprise any device for photographing images or pictures.

The optical device **1** may comprise a main body **20.** The optical device **1** may comprise a camera device **10A.** The camera device **10A** may be disposed in the main body **20.** The camera device **10A** may photograph a subject. The optical device **1** may comprise a display. The display may be disposed in the main body **20.** The display may output one or more of an image and a video photographed by the camera device **10A.** The display may be disposed on a first surface of the main body **20.** The camera device **10A** may be disposed on one or more of the first surface of the main body **20** and the second surface opposite to the first surface. As illustrated in FIG. 35, the camera device **10A** may have a triple camera disposed in a vertical direction. As illustrated in FIG. 36, the camera device **10A-1** may have a triple camera disposed in a horizontal direction.

Although the present embodiment of the present invention has been described with reference to the attached drawings, those skilled in the art will understand that the present invention can be implemented in other specific forms without changing the technical idea or essential characteristics thereof. Therefore, it should be understood that the embodiments described above are exemplary in all respects and not restrictive.

## Claims

1. A lens driving device comprising:
a fixed part;
a first moving part disposed on the fixed part;
a second moving part disposed in the first moving part;
a third moving part disposed in the second moving part;
a first driving part configured to move the first moving part in a first direction perpendicular to an optical axis direction;
a second driving part configured to move the second moving part in a second direction perpendicular to the optical axis direction and the first direction; and
a third driving part configured to move the third moving part in the optical axis direction,
wherein the first driving part comprises a first magnet disposed on the fixed part and a first coil disposed on the first moving part, and
wherein the second driving part comprises a second magnet disposed on the second moving part and a second coil disposed on the first moving part.

2. The lens driving device of claim 1, wherein the third driving part comprises a third magnet disposed on the third moving part and a third coil disposed on the second moving part.

3. The lens driving device of claim 1, comprising a first ball disposed between the fixed part and the first moving part in the second direction

4. The lens driving device of claim 1, comprising a second ball disposed between the first moving part and the second moving part in the first direction.

5. The lens driving device of claim 1, comprising a third ball disposed between the second moving part and the third moving part in the second direction.

6. The lens driving device of claim 3, wherein the fixed part comprises a lower plate and a protruding portion protruding from the lower plate,
wherein the protruding portion of the fixed part is disposed in the first moving part, and
wherein the first ball is disposed on the protruding portion of the fixed part.

7. The lens driving device of claim 1, comprising a first substrate comprising an outer portion disposed on the fixed part, an inner portion disposed on the first moving part, and a connecting portion connecting the outer portion and the inner portion,
wherein at least a portion of the connecting portion of the first substrate is movably formed in the first direction.

8. The lens driving device of claim 1, comprising a second substrate comprising an outer portion disposed on the fixed part, an inner portion disposed on the second moving part, and a connecting portion connecting the outer portion and the inner portion,
wherein at least a portion of the connecting portion of the second substrate is movably formed in the first direction and the second direction.

9. The lens driving device of claim 1, comprising a first yoke disposed on the first moving part and having an attractive force with the first magnet.

10. A lens driving device comprising:
a fixed part;
a first moving part disposed on the fixed part;
a second moving part disposed in the first moving part;
a third moving part disposed in the second moving part;
a first driving part configured to move the first moving part in a first direction perpendicular to an optical axis direction;
a second driving part configured to move the second moving part in a second direction perpendicular to the optical axis direction and the first direction; and
a third driving part configured to move the third moving part in the optical axis direction,
wherein the first moving part comprises a first portion disposed outside of the fixed part, and
wherein a ball is disposed between the first portion of the first moving part and the fixed part.
